(19) Europäisches Patentamt / European Patent Office / Office européen des brevets

(11) **EP 3 123 721 B1**

(12) **FASCICULE DE BREVET EUROPEEN**

(45) Date de publication et mention de la délivrance du brevet:
**10.08.2022   Bulletin 2022/32**

(21) Numéro de dépôt: **15769349.0**

(22) Date de dépôt: **26.03.2015**

(51) Classification Internationale des Brevets (IPC):
**H04N 19/42** *(2014.01)*    **H04N 19/60** *(2014.01)*
**G06F 17/10** *(2006.01)*

(52) Classification Coopérative des Brevets (CPC):
**H04N 19/60; G06F 17/10; H04N 19/42**

(86) Numéro de dépôt international:
**PCT/FR2015/050771**

(87) Numéro de publication internationale:
**WO 2015/145078 (01.10.2015 Gazette 2015/39)**

(54) **SYSTEME ET PROCEDE DE TRAITEMENT DE DONNEES**

SYSTEM UND VERFAHREN ZUR DATENVERARBEITUNG

SYSTEM AND METHOD FOR PROCESSING DATA

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.03.2014   FR 1452585**

(43) Date de publication de la demande:
**01.02.2017   Bulletin 2017/05**

(73) Titulaire: **Rozo Systems**
**44240 La Chapelle Sur Erdre (FR)**

(72) Inventeurs:
- **DAVID, Sylvain**
  **F-85130 Les Landes Genusson (FR)**
- **EVENOU, Pierre**
  **F-44240 La Chapelle sur Erdre (FR)**
- **MONCHANIN, Jean-Pierre**
  **F-44600 Saint Nazaire (FR)**
- **FERON, Didier**
  **F-44240 La Chapelle Sur Erdre (FR)**

(74) Mandataire: **Ipsilon**
**Europarc - Bat B7**
**3, rue Edouard Nignon**
**44300 Nantes (FR)**

(56) Documents cités:
- **József Vásárhelyi ET AL: "Analysis of Mojette Transform Implementation on Reconfigurable Hardware", Dagstuhl Seminar Proceedings 06141, Schloss Dagstuhl, Oberwolfach, Germany, 02.04-07.04.2006, 2 avril 2006 (2006-04-02), XP055161918, Schloss Dagstuhl, Oberwolfach, Germany ISSN: 1862-4405 Extrait de l'Internet: URL:http://drops.dagstuhl.de/volltexte/200 6/746/pdf/06141.VasarhelyiJozsef.Paper.746 ..pd f [extrait le 2015-01-14]**
- **"Index of Dagstuhl Seminar Proceedings 06141", Dagstuhl Seminar Proceedings 06141, Schloss Dagstuhl, Oberwolfach, Germany, 02.04-07.04.2006, 2 avril 2006 (2006-04-02), XP055161922, Schloss Dagstuhl, Oberwolfach, Germany ISSN: 1862-4405 Extrait de l'Internet: URL:http://drops.dagstuhl.de/portals/index .php ?semnr=06141 [extrait le 2015-01-14]**
- **József Vásárhelyi ET AL: "Mojette Transform FPGA Implementation and Analysis", Proceedings of Magyar Kutatók 10. Nemzetközi Szimpóziuma, 10th International Symposium of Hungarian Researchers on Computational Intelligence and Informatics (CINTI 2009), Budapest, Hungary, 12.11-14.11.2009, 12 novembre 2009 (2009-11-12), pages 351-363, XP055161928, Extrait de l'Internet: URL:http://conf.uni-obuda.hu/cinti2009/33_ cinti2009_submission.pdf [extrait le 2015-01-14]**

- Benoît Parrein: "The Mojette Erasure Code: Application to fault tolerant Distributed File System (DFS)", Journée inter GDR ISIS et SoCSiP, Télécom Bretagne, Brest, France, 4 Nov. 2014, 4 novembre 2014 (2014-11-04), pages 1-34, XP055258025, Extrait de l'Internet: URL:https://departements.telecom-bretagne.eu/data/elec/SITES/PublicElec/BenoitParrein_interGDR.pdf [extrait le 2016-03-14]
- GUEDON J P ET AL: "INTERNET DISTRIBUTED IMAGE INFORMATION SYSTEM", INTEGRATED COMPUTER-AIDED ENGINEERING, IOS PRESS, AMSTERDAM, NL, vol. 8, no. 3, 22 mars 2000 (2000-03-22), pages 205-214, XP001157068, ISSN: 1069-2509
- NICOLAS NORMAND ET AL: "A Geometry Driven Reconstruction Algorithm for the Mojette Transform", 1 janvier 2006 (2006-01-01), DISCRETE GEOMETRY FOR COMPUTER IMAGERY LECTURE NOTES IN COMPUTER SCIENCE;;LNCS, SPRINGER, BERLIN, DE, PAGE(S) 122 - 133, XP019047279, ISBN: 978-3-540-47651-1 le document en entier
- Benoît Parrein: "Description multiple de l'information par transformation Mojette", , 1 novembre 2001 (2001-11-01), pages i-xiv, 1-188, XP055161910, Ph.D. Thesis, Université de Nantes, France Extrait de l'Internet: URL:http://www.irccyn.ec-nantes.fr/~parrein/old_index/publis/phd.zip [extrait le 2015-01-14]
- NORMAND N ET AL: "Controlled Redundancy for Image Coding and High-Speed Transmission", VISUAL COMMUNICATIONS AND IMAGE PROCESSING '96 : 17-20 MARCH 1996, ORLANDO, FLORIDA, SPIE, BELLINGHAM, WASH , vol. 2727 17 mars 1996 (1996-03-17), pages 1070-1081, XP002721553, ISBN: 978-0-8194-2103-6 Extrait de l'Internet: URL:http://proceedings.spiedigitallibrary.org/proceeding.aspx?articleid=1017964&resultClick=1 [extrait le 2014-03-11]

**Description**

**DOMAINE DE L'INVENTION**

La présente invention concerne de manière générale le traitement informatique de données.

**ART ANTERIEUR**

Les systèmes de stockage de données réparties utilisent de manière classique une réplication massive des données stockées en vu d'obtenir un niveau de fiabilité satisfaisant.

L'utilisation de codes à effacement, tels que la transformée de Mojette, permet d'obtenir un niveau de fiabilité similaire tout en réduisant le volume de données de redondance nécessaire pour reconstruire un bloc de données d'un fichier.

Cependant, les solutions connues de codes à effacement ont l'inconvénient d'être consommatrices en temps de calcul processeur, ce qui restreint leur utilisation à des usages spécifiques tels que la sauvegarde.

Parmi les solutions de codes à effacement, il est connu d'implémenter des programmes qui utilisent la transformée de Mojette pour générer à partir d'un bloc de données, des projections, composées d'éléments appelés bins. Dans ce sens la transformée de Mojette est usuellement appelée transformée de Mojette directe. Pour reconstruire le bloc de données lesdits programmes utilisent aussi la transformée de Mojette Inverse. Les principes de la transformée de Mojette directe et de la transformée de Mojette inverse sont notamment décrits Jozsef le document Vasarhelyi ET AL: "Analysis of 1-19 Mojette Transform Implementation on Reconfigurable Hardware", Dagstuhl Seminar Proceedings 06141, Schloss Dagstuhl, Oberwolfach, Germany, 02.04-07.04.2006, 2 avril 2006 (2006-04-02), XP55161918, Schloss Dagstuhl, Oberwolfach, Germany ISSN: 1862 -4405.

Cependant, il a été constaté ces programmes qui utilisent la transformée de Mojette sont implémentés de telle manière que le temps nécessaire à la reconstruction d'un bloc de données est important par comparaison aux performances offertes par les matériels informatiques (hardware en anglais) actuels de sorte que ces programmes ne permettent pas d'exploiter pleinement les performances offertes par les systèmes hardware actuels. A titre d'exemple, dans le domaine du stockage, la vitesse de lecture/écriture d'une mémoire SSD ou Flash, n'est pas exploitée efficacement pas ces programmes. De manière similaire, dans le domaine des réseaux, les débits supérieurs à 10 Gigabit/s qu'offrent certaines lignes à fibres optiques, ne sont pas non plus être exploités efficacement par de tels programmes.

La présente invention a pour but de proposer un nouveau système et un nouveau procédé de traitement de données qui soient moins consommateur en temps de calcul et permette ainsi d'exploiter efficacement les performances des matériels informatiques.

En particulier, l'invention a pour but de proposer un nouveau système et un nouveau procédé de traitement de données permettant de limiter le temps nécessaire à la reconstruction d'un bloc de données.

**RESUME DE L'INVENTION**

A cet effet, l'invention a pour objet un système de traitement de données configuré selon la revendication 1 pour reconstituer un bloc, appelé support, formé de données informatiques de base, appelées pixels, à l'aide d'autres données informatiques, appelées bins, lesdits bins étant des éléments d'au moins deux projections différentes qui résultent d'une transformée mathématique de type Mojette, appliquée auxdits pixels,
le système comprenant aussi :

- une unité de traitement et de calcul de données ;
- une première zone mémoire, appelée mémoire de bin, dans laquelle lesdits bins générés sont écrits ;
- une deuxième zone mémoire, appelée mémoire de pixels, distincte de la mémoire de bin et dans laquelle les pixels dudit bloc à reconstruire sont destinés à être écrits,
caractérisé en ce que ladite unité de traitement et de calcul est configurée pour recevoir une requête de reconstruction du bloc de pixels, et pour :

  a) reconstruire un, ou plusieurs, pixel, dit pixel direct, pour lequel il y a égalité de valeur avec un bin, dit bin direct, le calcul dudit bin direct n'ayant fait intervenir que ledit pixel direct,
  b) reconstruction de chaque pixel restant par application de l'opérateur XOR entre un bin, dont le calcul a fait intervenir ledit pixel restant, et le ou les autre(s) pixel(s) reconstruit(s) qui sont intervenus, avec ledit pixel restant, dans le calcul dudit bin ;

ladite unité étant configurée pour réaliser les opérations de reconstruction des pixels par lecture desdits bins dans la mémoire de bin, écriture des pixels reconstruits dans la mémoire de pixels, et par lecture desdits pixels reconstruits dans la mémoire de pixels, de sorte que les étapes de reconstruction des pixels sont dépourvues d'opération d'écriture de bin dans la mémoire de bin.

On entend par "projections différentes" des projections obtenues par application de la transformée de Mojette selon deux directions de projection différentes comme explicité plus en détail par la suite.

Ledit ou chaque pixel direct est reconstruit en écrivant dans la mémoire de pixels la valeur du bin direct correspondant. Chaque pixel restant, c'est-à-dire chaque pixel qui est intervenu avec un ou plusieurs autres pixels dans le calcul d'un ou de plusieurs bins, est reconstruit en écrivant dans la mémoire de pixels le résultat des opérations XOR entre le bin correspondant et le ou lesdits autres pixels reconstruits correspondants.

Ainsi la reconstruction d'un pixel direct permet de reconstruire un autre pixel dans le cas où celui-ci a servi avec ledit pixel direct à calculer un bin donné. Pour un autre bin ayant été calculé par combinaison de plusieurs pixels dont l'un n'est pas encore reconstruit, on peut alors reconstruire le pixel non encore reconstruit de cette combinaison par application de l'opérateur XOR entre ledit bin et ledit ou lesdits autres pixels déjà reconstruits. Le calcul des pixels peut ainsi s'effectuer de proche en proche en utilisant un ou plusieurs pixels venant d'être reconstruit pour le calcul d'un autre pixel non encore reconstruit.

Ainsi, de proche en proche, les pixels sont reconstruits sans modification, ou mise à jour, des valeurs de bins de sorte que les opérations de reconstruction ne génèrent pas d'écriture dans la mémoire de bin.

Le système de reconstruction connu de l'état de la technique, et notamment du document Jozsef Vasarhelyi ET AL: "Analysis of 1-19 Mojette Transform Implementation on Reconfigurable Hardware", Dagstuhl Seminar Proceedings 06141, Schloss Dagstuhl, Oberwolfach, Germany, 02.04-07.04.2006, 2 avril 2006 (2006-04-02), XP55161918, Schloss Dagstuhl, Oberwolfach, Germany ISSN: 1862 -4405, utilise l'algorithme de reconstruction appelé transformation de Mojette Inverse, avec une implémentation selon laquelle le pixel reconstruit est soustrait à la valeur du bin associé au niveau de chaque projection. La valeur du bin est alors modifiée du fait de la soustraction et re-mémorisée dans la mémoire de bin. Dans le système selon l'invention, cette opération de mise à jour de la valeur du bin n'est pas mise en œuvre, ce qui permet de ne pas avoir à écrire dans la mémoire de bin.

Une telle conception du système selon l'invention, permet d'optimiser les accès mémoires en réécrivant chaque pixel à reconstruire sous forme d'un bin ou d'une combinaison d'un bin et de pixels(s) déjà reconstruit(s) pour n'avoir à exécuter d'opérations d'écritures que sur la mémoire de pixel et ne pas avoir à réaliser une multiplicité de lectures/écritures successives des bins dans la mémoire de bin.

Une telle limitation du nombre d'accès en écriture de la mémoire de bin permet d'augmenter les performances de reconstruction des supports avec une unité de traitement de type mono-cœur ou multi-cœurs.

Ainsi pour la reconstruction des pixels du support, le processeur de l'unité n'utilise que des requêtes de lecture de la mémoire de bin où sont localisées les projections et des requêtes d'écritures des pixels reconstruits directement sur la mémoire de pixels, sans avoir à requérir de nouvelles écritures au niveau de la mémoire de bin.

L'optimisation des accès mémoires réalisée par un tel système de traitement rend le système de traitement particulièrement adapté aux systèmes et usages requérant une bande passante élevée.

Avantageusement, la mémoire de bin et la mémoire de pixels sont réalisées sous forme de deux supports physiques distincts. En particulier, la mémoire de bin peut faire partie d'un premier dispositif de type ordinateur ou serveur et la mémoire de pixel peut faire partie d'un deuxième dispositif de type ordinateur ou serveur. L'unité de traitement et de calcul peut faire partie du premier ou du deuxième dispositif, ou encore d'un troisième dispositif distinct, connectable par un réseau de communication à l'un ou l'autre des dispositifs.

L'utilisation de l'opérateur mathématique « OU exclusif » (XOR) permet de limiter la quantité de mémoire nécessaire pour exécuter les opérations de reconstruction des pixels du support.

Selon une caractéristique avantageuse de l'invention, l'unité de traitement et de calcul comprend un programme, appelé programme de reconstruction de pixels, permettant la réalisation des étapes a) et b), ledit programme présentant des instructions selon lesquelles chaque pixel direct à reconstruire, noté support(kd), est calculé par une équation de la forme :

$$support\ (kd) = projection[i].bin[j],$$

et ledit programme présentant des instructions selon lesquelles chaque pixel à reconstruire, noté support(k), autre qu'un pixel direct, est calculé par une équation de la forme :

$$support\ (k) = projection[i].bin[j]{\wedge}support(l)$$

ou

**4**

$$support (k) = projection[i].bin[j]^{\wedge}support(l)^{\wedge}...^{\wedge} support(n)$$

k ou kd étant l'indice du pixel du support à reconstruire

l, n étant des indices définissant différents pixels reconstruits et ayant servi à la génération du bin projection[i].bin[j];

$\wedge$ : l'opérateur XOR

projection[i].bin[j] : la valeur du bin[j] de la projection projection[i] qui a été généré en utilisant le pixel support (kd) ou support (k) ainsi que, lorsque le bin n'est pas un bin direct, les pixels support[l] ou support[l]$^{\wedge}...^{\wedge}$ support[n].

L'expression « $^{\wedge}...^{\wedge}$ support (n) » correspond à un ou plusieurs autres pixels combinés avec le pixel support[l] lorsque la génération de bin[j] a fait intervenir les pixels support (k) et support(l) et ledit ou lesdits autres pixels « $^{\wedge}...^{\wedge}$ support (n) ».

Pour expliciter le fait que les opérations de reconstruction de pixels sont dépourvues d'écriture dans la mémoire de bin au cours de la reconstruction desdits pixels du support, on notera que, selon ces instructions, la partie à gauche de l'égalité est à chaque fois un pixel, ce qui traduit le fait qu'il n'y a pas d'opération d'écriture dans la mémoire de bin, mais simplement une opération de lecture, les opérations d'écriture étant des écritures de pixel opérées dans la mémoire de pixel.

La liste des pixels d'indice l, ..., n qui, combinés avec le pixel d'indice k, donne la valeur du bin d'indice j de la projection d'indice i, peut être obtenue à partir de l'algorithme de reconstruction connu de l'état de la technique de la transformée de Mojette inverse. Cette liste permet de former une table de correspondance, comme expliqué ci-dessous, qui peut servir à générer un ou plusieurs programmes de reconstruction comprenant lesdites opérations informatiques de type support (kd) = projection[i].bin[j], ou support (k) = projection[i].bin[j]$^{\wedge}$support(l) ou support(k) = projection[i].bin[j]$^{\wedge}$support(l)$^{\wedge}...^{\wedge}$ support(n) suivant le nombre de pixels intervenus dans le calcul du bin associé.

La liste de pixels peut être soit stockée dans une mémoire à associer à chaque bin et utilisée au moment de la reconstruction du pixel k ou kd à partir du bin[j] de la projection[i] ou donner lieu à la génération d'un programme réalisant les opérations : support (kd) = projection[i].bin[j], support (k) = projection[i].bin[j]$^{\wedge}$support(l) ou support[k] = projection[i].bin[j]$^{\wedge}$support(l)$^{\wedge}...^{\wedge}$ support(n), suivant le nombre de pixels intervenus dans le calcul du bin associé.

La suite d'opérations présentée ci-dessus peut être obtenue par une exécution hors-ligne de l'algorithme connu de transformation de Mojette inverse pour l'ensemble de projections considéré, noté M, parmi les G projections générées et classées de préférence dans l'ordre croissant de leurs angles (p,q). G et M sont des entiers naturels, avec M inférieur ou égal à G.

Selon une caractéristique avantageuse de l'invention, l'unité de traitement et de calcul comprend un autre programme, appelé programme d'association, comprenant, pour chaque pixel à reconstruire, les instructions suivantes :

- identification du ou de chaque bin dans le calcul duquel ledit pixel à reconstruire est intervenu ;
- association dudit bin et dudit pixel dans une table de correspondance; et ladite unité de traitement et de calcul est configurée pour générer ledit programme de reconstruction de pixels en fonction de la table de correspondance.

Dans le cas d'un bin dont la génération a fait intervenir un ou plusieurs autres pixels que ledit pixel à reconstruire, ledit bin et ledit pixel à reconstruire, sont à la fin des opérations d'association, associés avec ledit ou lesdits autres pixels qui sont intervenus dans le calcul dudit bin.

Ledit bin et le ou lesdits pixels peuvent être associés par exemple par leurs indices en les inscrivant dans une même ligne ou même colonne de la table de correspondance. En particulier, pour chaque pixel à reconstruire, il peut être procédé à l'ajout de l'index dudit pixel dans une table qui associe l'indice dudit pixel à l'indice d'un ou plusieurs bins dans le calcul duquel ledit pixel intervient.

Ladite table de correspondance peut être composée de plusieurs tables qui se distinguent les unes des autres par exemple par les groupes de projections dont sont tirées les bins qui sont associés à des pixels. Ainsi la table de correspondance peut comprendre plusieurs tables qui font intervenir chacune des M projections parmi les G générées, et chaque table comprend un groupe de M projections qui est différent du groupe de M projection d'une autre table.

Autrement dit, il est possible de procéder à l'association d'un bin direct et d'un pixel direct dans une table de correspondance, et, de manière similaire, pour chaque pixel à reconstruire, autre qu'un pixel direct, intervenu dans la génération d'un bin avec d'autre(s) pixel(s), il est possible de procéder à l'association entre eux dans la table de correspondance des pixels et du bin correspondant.

L'utilisation de la table de correspondance entre pixels et bins permet de calculer directement chaque pixel à partir de la valeur d'un bin associé et le cas échéant du ou des pixels déjà reconstruits (en commençant par le ou les pixels directs) ayant servi au calcul du bin et dont les indices (ou informations d'identification) sont mémorisées dans la table de correspondance. Avantageusement, la table de correspondance est générée de la manière suivante. Le système simule l'application de la transformée de Mojette Inverse aux bins d'au moins M projections en remplaçant l'étape de soustraction d'un pixel à un bin par l'association dans une table de correspondance de l'index dudit pixel à l'index du bin ou de chaque bin dans le calcul duquel le pixel est intervenu. Ladite transformée de Mojette Inverse peut être appliquée selon l'algorithme décrit dans le paragraphe 3.1 intitulé "The case where $qi = 1$ for $i \in Z_Q$" dans le document *"A geometry driven reconstruction algorithm for the Mojette transform », from Nicolas Normand, Andrew Kingston, Pierre Evenou, IRCCyN/IVC UMR CNRS* 6597 *publié dans « Discrete Geometry for Computer Imagery, Szeged : Hungary (2006)"*. Les étapes de cet algorithme qui sont remplacées par l'opération d'association dans une table de correspondance sont les étapes 18 à 27. En particulier l'implémentation de ladite transformée de Mojette Inverse est modifiée pour remplacer l'opération de soustraction utilisée usuellement par l'opération d'ajout de l'index dudit pixel dans la table qui associe ledit indice du pixel à l'indice d'un ou plusieurs bins dans le calcul duquel ledit pixel intervient. Ainsi le système selon l'invention permet de générer précédemment à la réception d'une requête de reconstruction, un code ou programme de reconstruction permettant, lorsqu'il est exécuté suite à réception d'une requête, de reconstruire chaque support sans passer par des étapes d'écriture intermédiaire de bins sur la mémoire de bin.

Selon une caractéristique avantageuse de l'invention, un nombre entier supérieur ou égal à deux, noté G, de groupes de bins, appelés projections, ayant été généré à partir des pixels dudit bloc de telle sorte que ledit support puisse être reconstruit avec un nombre minimal donné, noté M, de projections, M étant inférieur ou égal à G, l'unité est configurée pour permettre de générer les G projections de la manière suivante :

i)- organisation du bloc de pixels en un rectangle de dimensions {P,Q}, P étant le nombre de colonnes et Q le nombre de lignes, puis

ii)- définition d'un repère cartésien (p, q) dont l'origine est attachée à un pixel formant de préférence un coin du rectangle,

iii)- définition de G directions, dite directions de projection, dans le repère (p, q) iv)- pour chacune desdites G directions de projection, on calcule, pour chaque pixel d'une ligne ou d'une colonne du bloc, le bin correspondant par combinaison, par application de l'opérateur XOR, dudit pixel avec les autres pixels du bloc rencontrés en suivant ladite direction de projection ou par égalité avec ledit pixel lorsqu'aucun autre pixel n'est rencontré en suivant ladite direction de projection.

Autrement dit, pour chaque ligne de projection appliquée au support, on applique l'opérateur XOR aux pixels du bloc rencontrés suivant la direction de projection.

Avantageusement, concernant le repère (p, q), le vecteur p correspond à l'axe des lignes et le vecteur q à celui des colonnes.

Le nombre G de projections généré correspond à la somme du nombre M de projections minimal nécessaire pour reconstruire le support généré et du nombre, noté R, correspondant au niveau de redondance souhaité.

Le nombre M minimal de projections et le nombre G de projections à générer sont définis par l'utilisateur au moment de l'application de la transformée aux pixels du support.

Selon une caractéristique avantageuse de l'invention, ledit système étant aussi configuré pour générer des bins par application d'une transformée mathématique de type Mojette à un bloc de pixels, l'unité de traitement et de calcul est configurée pour générer un programme, appelé programme de génération de bins, permettant de générer lesdits bins, ledit programme comprenant, pour chaque bin à générer, les instructions suivantes :

- lecture à partir de la mémoire de pixels, du pixel ou des pixels à combiner entre eux pour générer ledit bin ;
- génération dudit bin par application de l'opérateur XOR aux valeurs desdits pixels ou génération dudit bin avec une valeur égale au pixel dans le cas où la génération du bin implique uniquement ledit pixel;
- écriture du résultat de l'opération précédente dans la mémoire de bin,
et le programme est exempt d'instructions de remise à zéro de la valeur de bin à générer, et/ou d'étape de lecture intermédiaire du bin à générer et/ou d'étape de combinaison XOR entre un bin à générer et lesdits pixels.

On entend par lecture intermédiaire de bin une lecture de bin avec d'obtenir le bin calculé par combinaison des pixels selon la direction de projection de projection.

Grâce à une telle conception du système selon l'invention, il n'est plus nécessaire d'exécuter un nombre de lectures et écritures successives aussi important qu'avec la solution connue de l'état de la technique pour générer un bin.

Selon une caractéristique avantageuse de l'invention, l'unité de traitement et de calcul comprend un autre programme, appelé programme de simulation de génération de bins, incluant des instructions de remise à zéro des valeurs de bins à générer, et/ou de lecture intermédiaire du bin à générer et/ou de combinaison XOR entre un bin à générer et lesdits pixels, l'unité étant configurée pour générer ledit programme de génération de bins en identifiant le ou les pixels utilisés par ledit programme de simulation de génération de bins pour générer les bins correspondants et en définissant des instructions de combinaison XOR de pixels qui sont exemptes desdites instructions de remise à zéro des valeurs de bin à générer, et/ou d'étape de lecture intermédiaire du bin à générer et/ou d'étape de combinaison XOR entre le bin à générer et lesdits pixels.

Autrement dit, ledit programme de simulation de génération de bins, qui correspond au programme connu de l'état de la technique, c'est-à-dire à l'implémentation de la transformée de Mojette connue, pour générer un bin est déroulé de préférence « hors-ligne », c'est-à-dire sans écrire sur la mémoire de pixels ou la mémoire de bins et avant la réception d'une requête de génération de bin, afin de générer un programme de génération de bins, faiblement consommateur en accès mémoire et qui est destiné à être exécuté « en ligne », c'est-à-dire en lien avec la mémoire de pixels et la mémoire de bin et suite à la réception d'une requête de génération de bins.

Autrement dit, la pré-exécution hors-ligne, ou simulation, des transformées de Mojette inverse et directe, connues de l'état de la technique, permet au système selon l'invention, de générer de nouveaux programmes, destinés à être exécuté en ligne, qui tiennent compte des accès mémoires nécessaires pour les transformées respectives.

L'invention concerne aussi un procédé de traitement et un produit de programme d'ordinateur correspondant.

A cet effet, l'invention propose un procédé de traitement de données, selon la revendication 2 ledit procédé permettant de reconstituer dans une zone mémoire, appelée mémoire de pixels, un bloc, appelé support, formé de données informatiques de base, appelées pixels, à l'aide d'autres données informatiques, appelées bins, lesdits bins étant des éléments d'au moins deux projections différentes qui résultent d'une transformée mathématique de type Mojette, appliquée auxdits pixels et qui sont mémorisés dans une zone mémoire, appelée mémoire de bin, distincte de la mémoire de pixels, caractérisé en ce que ledit procédé comprend les étapes suivantes :

- réception d'une requête de reconstruction du bloc de pixels,
- reconstruction d'un, ou plusieurs, pixel du support, dit pixel direct, pour lequel il y a égalité de valeur avec un bin, dit bin direct, le calcul dudit bin direct n'ayant fait intervenir que ledit pixel direct,
- reconstruction de chaque pixel restant par application de l'opérateur XOR entre un bin, dont le calcul a fait intervenir ledit pixel restant, et le ou les autre(s) pixel(s) reconstruit(s) qui sont intervenus, avec ledit pixel restant, dans le calcul dudit bin ;

les opérations de reconstruction des pixels étant réalisées par lecture desdits bins dans la mémoire de bin, lecture desdits pixels reconstruits dans la mémoire de pixels et par écriture des pixels reconstruits dans la mémoire de pixel, de sorte que les étapes de reconstruction des pixels sont dépourvues d'opération d'écriture de bin dans la mémoire de bin.

Selon une caractéristique avantageuse de l'invention, chaque pixel direct à reconstruire, noté support(kd), est calculé par une équation de la forme :

$$\text{support (kd)} = \text{projection[i].bin[j]},$$

et chaque pixel à reconstruire, noté support(k), autre qu'un pixel direct, est calculé par une équation de la forme :

$$\text{support (k)} = \text{projection[i].bin[j]}^\text{support(l)}$$

ou

$$\text{support (k)} = \text{projection[i].bin[j]}^\text{support(l)}{}^\wedge...^\wedge \text{ support (n)}$$

k ou kd étant l'indice du pixel du support à reconstruire

l, n étant des indices définissant différents pixels du support déjà reconstruits ; ^ : l'opérateur XOR

projection[i].bin[j] : la valeur du bin[j] de la projection projection[i] qui a été généré en utilisant le pixel support (k ou kd) ainsi que, lorsque le bin n'est pas un bin direct, les pixels support(l) ou support(l)^...^ support (n).

Selon une caractéristique avantageuse de l'invention, préalablement à la réception de la requête de reconstruction, le procédé comprends les étapes suivantes, pour chaque pixel à reconstruire:

- identification du ou de chaque bin dans le calcul duquel ledit pixel à reconstruire est intervenu ;
- association dudit bin et dudit pixel dans une table de correspondance ;
- génération desdites équations de reconstruction de pixels en fonction de la table de correspondance.

Selon une caractéristique avantageuse de l'invention, pour générer un bin, le procédé comprend les suivantes :

- lecture à partir de la mémoire de pixels, du pixel ou des pixels à combiner entre eux pour générer ledit bin ;
- génération dudit bin par application de l'opérateur XOR aux valeurs desdits pixels ou génération dudit bin avec une valeur égale au pixel dans le cas où la génération du bin implique un seul pixel;
- écriture du résultat de l'opération précédente dans la mémoire de bin, et le procédé pour générer ledit bin est exempt d'instructions de remise à zéro de la valeur dudit bin à générer, et/ou d'étape de lecture intermédiaire du bin à générer et/ou d'étape de combinaison de type XOR entre un bin à générer et lesdits pixels.

Selon une caractéristique avantageuse de l'invention, préalablement à la génération de bins, on simule une génération de bins qui inclue des instructions de remise à zéro des valeurs de bins à générer, et/ou de lecture intermédiaire du bin à générer et/ou de combinaison entre un bin à générer et lesdits pixels,
et un programme de génération de bins est généré après avoir simulé la génération de bins, ledit programme de génération de bins étant généré en identifiant le ou les pixels utilisés lors de la simulation de génération de bins pour générer les bins correspondants et en définissant des instructions de combinaison de pixels qui sont exemptes desdites instructions de remise à zéro des valeurs de bin à générer, et/ou d'étape de lecture intermédiaire du bin à générer et/ou d'étape de combinaison entre le bin à générer et lesdits pixels.

L'invention concerne également selon la revendication 3 un produit de programme d'ordinateur téléchargeable depuis un réseau de communication et/ou stocké sur un support lisible par ordinateur et/ou exécutable par un processeur d'une unité de traitement et de calcul, caractérisé en ce qu'il comprend des instructions de code de programme pour mettre en œuvre les étapes d'un procédé selon la revendication 2 lorsque ledit programme est exécuté par ledit processeur de l'unité.

## BREVE DESCRIPTION DES DESSINS

L'invention sera bien comprise à la lecture de la description suivante d'exemples de réalisation, en référence aux dessins annexés dans lesquels :

- la figure 1 est une vue d'une installation selon l'invention qui comprend une mémoire de pixels, une mémoire de bin et une unité de traitement et de calcul;
- la figure 2 est une vue illustrant la génération de bins à partir des pixels d'un support suivant plusieurs directions de projections notées projection 0, projection 1, projection 2, l'index des bins obtenus étant noté bin_idx ;
- la figure 2A est un tableau qui indique la composition de chaque bin de projection généré comme illustré à la figure 2 ;
- la figure 3 illustre les différents échanges composés d'opérations de lecture (read) et d'écriture (write) de données (data) entre l'unité et les mémoires pour le calcul d'un bin, noté bin[0], selon la transformée de Mojette directe connue de l'état de la technique ;
- la figure 4 détaille des étapes d'exécution de la transformée de Mojette directe selon l'invention pour le calcul de bin[0];
- la figure 5 illustre le parcours de reconstruction pour chacune des combinaisons de projections possibles avec les projections obtenues nommées projection 0, projection 1 et projection 2, conformément à la figure 2 ;
- la figure 6 illustre l'ordre, correspondant aux flèches, dans lequel les bins de la combinaison de projections projection 0 et projection 1, sont parcourus pour reconstruire deux pixels ;
- la figure 7 illustre les échanges entre l'unité et les mémoires pour la reconstruction de deux pixels (pixel[0] et pixel[128]) du support à partir des bins de projection1 et des bins de projection0 selon la transformée de Mojette inverse connue de l'état de la technique;
- la figure 8 illustre les opérations réalisées pour le même exemple que celui des figures 6 et 7 en appliquant une reconstruction avec la transformée de Mojette inverse selon l'invention.

## DESCRIPTION DETAILLEE

Dans l'exemple détaillé ci-après et illustré aux figures, on applique une transformée mathématique de type Radon discrète exacte à un bloc de données informatiques. Le théorème de projection de Radon établit la possibilité de reconstituer une fonction réelle à deux variables (assimilable à une image) à l'aide de la totalité de ses projections selon des droites concourantes. De manière générale, pour tout complément d'information sur la transformée de Radon discrète et ses propriétés, le lecteur se reportera utilement à l'article « IEEE TRANSACTIONS ON ACOUSTICS, SPEECH, AND SIGNAL PROCESSING, VOL. ASSP-35, NO. 2, FEBRUARY 1987 Discrète Radon Transform GREGORY BEYLKIN ».

Plus précisément la transformée utilisée est une transformée de type Mojette, modifiée par rapport à celle connue de l'état de la technique. Les données informatiques de base dudit bloc sont appelées pixels. Autrement dit, les pixels forment les informations de base du bloc.

La transformée de Mojette peut être avantageusement utilisée en tant que code à effacement. Les codes à effacement (erasure codes en anglais) s'appliquent pour des erreurs en rafales.

Un code à effacement, spécifié par un quadruplé (M,G,b,r), est une fonction E qui associe les messages L = (L1,...,LM) de K paquets de taille b à un encodage de type E(L) = (E1(L),...,EG(L)) de G paquets de taille b, tel que n'importe quelles séries de r paquets indicés ij Ei1(L),...,Eir(L) de E(L) détermine de manière unique le message L. Le code est dit Maximum Distance Separable (MDS) si et seulement si r = M. Cette définition coïncide avec celle donnée dans le document « F.J. MacWilliams and N.J.A. Sloane. The Theory of Error-Correcting Codes. North Holland, 1983 », auquel l'Homme du Métier peut se reporter pour plus d'information sur les codes à effacement.

Pour une transformée de Mojette utilisée comme code à effacement, les projections résultant de la transformée de Mojette sont les mots de codes. Les projections redondantes permettent de compenser celles qui sont perdues.

Un code à effacement basé sur la transformée de Mojette, spécifié par le triplet (M,G,B(i)) est une fonction $proj_{pi,qi}$ qui transforme une image f constituée de M lignes en une série de G projections projp1,q1 , ... , projpG,qG de taille B(i), tel que M projections parmi G permettent de reconstruire de manière unique l'image f. Les différentes projections obtenues ont un rôle équivalent en matière de reconstruction. La perte d'une projection est compensée par une autre projection quelle que soit son angle, tant que le nombre de projections ne dépasse pas G - M projections perdues.

Le bloc est appelé support. La transformée mathématique appliquée aux pixels génère plusieurs groupes de données informatiques, appelées bins. Lesdits groupes sont appelés projections.

Les bins d'une première projection se distinguent des bins d'une deuxième projection par la direction de projection utilisée pour générer les bins correspondants. Une projection est ainsi un ensemble (ou groupe) de bins auquel correspond une direction de projection donnée. Une projection est définie par une taille en bins, et un angle (p ; q) définissant une direction de projection comme détaillé ci-après.

La transformée de Mojette directe correspond ainsi à un ensemble de projections discrètes résultant de combinaison utilisant l'opérateur XOR (ou exclusif) entre des pixels du support.

La valeur de chaque bin correspond à la somme des valeurs de pixels pris selon une ligne de projection. Une ligne de projection correspond à une direction de projection appliquée à un pixel du support.

L'implémentation de la transformée selon l'invention appliquée dans le sens d'une reconstruction d'un support à partir des bins de plusieurs projections ou dans le sens d'une génération de bins, en particulier de plusieurs projections, à partir des pixels d'un support, est basée sur l'implémentation de la transformée de Mojette connue de l'état de la technique qui est détaillée ci-après. Autrement dit, l'installation et le procédé selon l'invention reprennent le principe de projections de la transformée de Mojette et ses propriétés, mais avec une implémentation modifiée par rapport à celle connue de l'état de la technique en ce qui concerne les accès mémoires.

De manière générale, pour tout complément d'information sur la transformée de Mojette et ses propriétés, le lecteur se reportera utilement à l'article "Internet distributed image information system" de J.P. Guédon, B. Parrein et N. Normand, publié dans "Integrated Computer - Aided Engineering", 8 (2001), pages 205-214, ISSN 1069-2509, IOS Press.

Par la suite on utilisera les appellations suivantes :

- transformée de Mojette directe courante : la transformée de Mojette directe implémentée de manière connue de l'état de la technique, appliquée à un bloc de pixels pour le décomposer en bins,
- transformée de Mojette directe selon l'invention : la transformée de Mojette directe implémentée selon l'invention, correspondant à une modification de l'implémentation de la transformée de Mojette courante, appliquée à un bloc de pixels pour le décomposer en bins,
- transformée de Mojette inverse courante : la transformée de Mojette inverse implémentée de manière connue de l'état de la technique, appliquée aux bins pour reconstruire le bloc de pixels,
- transformée de Mojette inverse selon l'invention : la transformée de Mojette inverse implémentée selon l'invention, correspondant à une modification de l'implémentation de la transformée de Mojette inverse courante, appliquée aux bins pour reconstruire le bloc de pixels.

Concernant plus particulièrement l'implémentation de la transformée de Mojette inverse courante, le lecteur se reportera utilement à l'article *"A geometry driven reconstruction algorithm for the Mojette transform »*, from Nicolas Normand, Andrew Kingston, Pierre Evenou, IRCCyN/IVC UMR CNRS 6597 publié dans « Discrete Geometry for Computer Imagery, Szeged : Hungary (2006)"*. Le lecteur pourra aussi se reporter aux annexes A et B de la thèse de B.Parrein « Description multiple de l'information par transformation Mojette, Benoît Parrein, thèse de doctorat, Université de Nantes, Novembre, 2001 » qui peut être consultée notamment à l'adresse : http://www.irccyn.ec-nantes.fr/~parrein/pubs.htm .

Concernant plus particulièrement l'implémentation de la transformée de Mojette directe courante, le lecteur se reportera utilement au chapitre 3 section 3.2.1 de la thèse de B.Parrein citée ci-dessus.

Le bloc de pixels se présente sous la forme d'une file de pixels qui peut être considérée pour son traitement comme un rectangle de dimensions {P, Q}. P est le nombre de colonnes et Q le nombre de lignes. Avantageusement, le nombre de lignes Q correspond au nombre M minimal de projections nécessaire à la reconstruction du bloc de pixels.

Un repère cartésien (p,q) est associé à ce rectangle. L'origine de ce repère est attachée à un pixel du rectangle, de préférence un pixel situé à un coin du rectangle. Le vecteur p de ce repère correspond à l'axe des lignes. Le vecteur q correspond à l'axe des colonnes.

On définit des directions de projection par composition des deux entiers (p, q). A titre d'exemple, la direction de projection p = 0 et q = 1 correspond à une projection suivant la direction des colonnes.

Une opération de projection consiste, pour une direction de projection définie par un couple de valeurs p, q, à balayer une ligne ou une colonne et, pour chaque pixel de la ligne ou de la colonne balayée, à combiner par application de l'opérateur XOR ledit pixel avec les autres pixels rencontrés le long de cette direction de projection.

En pratique, un déplacement dans le bloc de pixels suivant la direction de projection correspond à un déplacement dans la file de pixels avec une valeur de saut donnée, appelée offset.

Comme rappelé ci-dessus, la combinaison de deux éléments entre eux, par exemples deux pixels, consiste en l'application de l'opérateur mathématique « ou exclusif », c'est-à-dire l'opérateur XOR.

Un nombre, noté M, de directions de projections minimum nécessaire souhaité pour la reconstruction et un niveau R de redondance souhaité, sont de préférence définis initialement par l'utilisateur lorsqu'il lance le procédé de génération de projections à l'aide du système tel que décrit ci-après.

Un fichier de métadonnées est associé aux projections générées pour, lors de la reconstruction, pouvoir déterminer les nombres M et R utilisés et éventuellement la taille du bloc. Le niveau de redondance souhaité correspond au nombre de projections supplémentaires que l'on souhaite générer en plus du nombre de projections (supérieur ou égal à 2) défini comme étant nécessaire pour reconstruire le bloc de pixels.

Pour un niveau de redondance souhaité égal à R, le nombre minimal de projections à appliquer au bloc de pixels pour pouvoir le reconstruire avec ledit niveau de redondance souhaité est égal à M+R. Ainsi, la transformée Mojette directe courante génère M+R projections.

La génération d'un bin, noté ici « proj(k) », d'une projection, s'écrit dans le cas général et pour une projection d'angles (p,q), avec une équation du type :

$$\text{proj}(k) = \text{support}(i,j) \text{ xor support}(l,r)\ldots.$$

k étant un entier, avec proj(k) étant le kième bin de ladite projection et support (i,j) et support (l,r) étant des pixels du support, i, j et l,r étant des indices définissant la position du pixel dans le rectangle de pixels de dimensions {P, Q}. Les « .... » correspondent à ou aux autres pixels éventuellement utilisés par la projection, c'est-à-dire à ou aux autres pixels rencontrés suivant la direction de projection utilisée.

Les termes support (i,j) et support (l,r) peuvent aussi s'écrire pixel[x] et pixel[y], x et y correspondant au rang de ces pixels situés sur la droite de projection associée au kième bin. De même, si la projection est notée projection0, proj (k) peut s'écrire projection0.bin[k].

En particulier, l'algorithme de la Transformée Mojette directe courante peut s'écrire sous la forme :

```
debut
Pour chaque ligne de 1 à Q faire
Pour chaque colonne de 1 à P faire
k <- p.ligne - q.colonne
proj(k) xor <- support(ligne,colonne)
finPour
finPour
Fin
```

Comme rappelé ci-dessus, une projection « proj » correspond ainsi à un ensemble de bins "(proj(k)". En particulier ladite projection « proj » est définie par une taille en bin, un angle (p ; q). Le nombre de pixels à prendre en compte pour la génération d'un bin dépend de l'angle (p ; q) associé à la projection.

Cependant, comme détaillé dans l'exemple ci-après, pour générer une telle projection de bins proj(k), l'implémentation de la transformée de Mojette directe courante, c'est-à-dire connue de l'état de la technique, prévoit de pré-initialiser tous les bins d'une projection à 0 avant de procéder à la génération d'une projection par application de la transformée de Mojette directe.

Dans l'exemple détaillé ci-après la transformation Mojette directe courante est appliquée sur un support de 256 pixels.

On considère dans cet exemple le cas où M=2 et R=1. Trois projections sont ainsi générées. Le support de pixels est réparti sur deux lignes (M = 2) de 128 pixels chacune. Ainsi on dispose d'un rectangle {P,Q} de 128 colonnes et de 2 lignes.

Les angles (p ; q) associés respectivement aux projections à générer sont les suivants:

- projection0 : p= -1 ; q= 1;
- projection1 : p=0 ; q= 1;
- projection2 : p=1 ; q= 1;

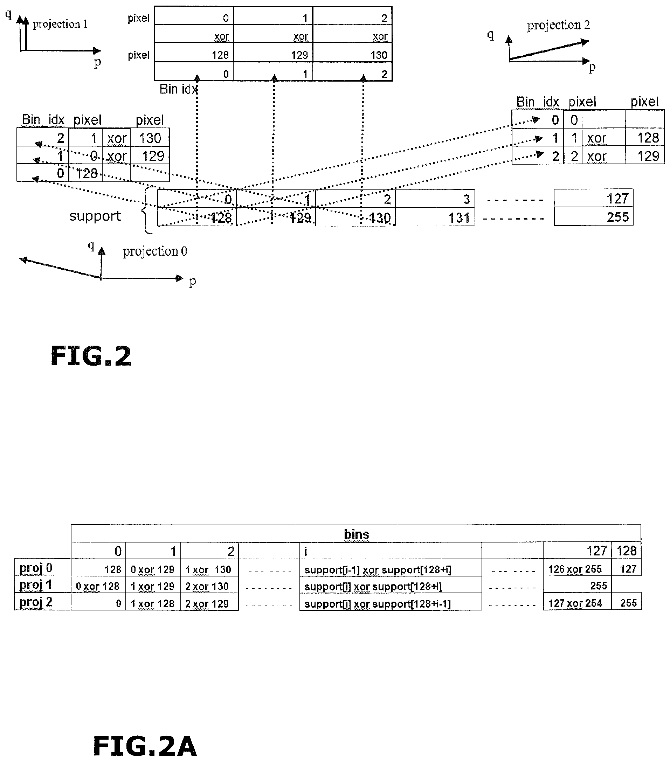

La figure 2 illustre l'application de la transformée de Mojette directe sur un rectangle de pixels (2,128) et la représentation des trois projections résultantes, ainsi que les valeurs de bins associés.

Le tableau de la figure 2A détaille le contenu de chacune des projections générées à la figure 2 par la transformée de Mojette directe courante sur le support de 256 pixels.

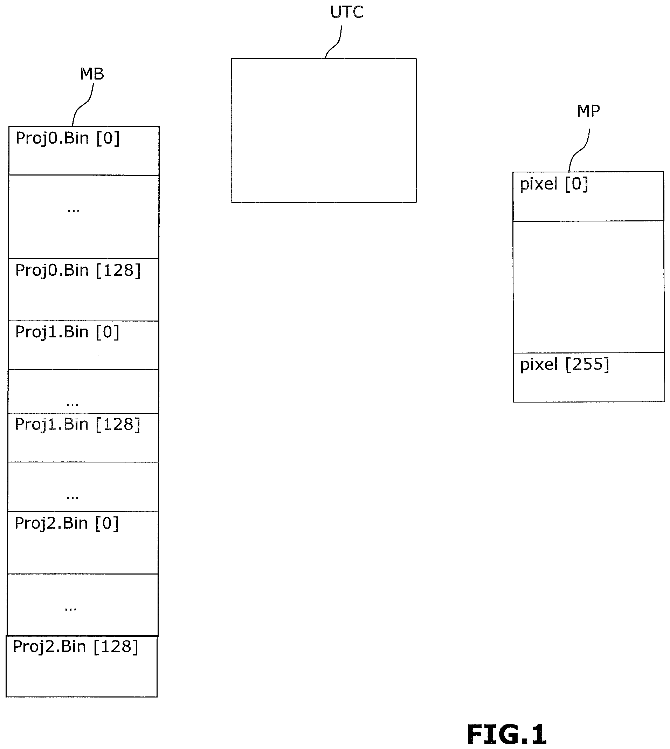

Comme illustré à la figure 1, la transformée de Mojette directe courante, de même que la transformée de Mojette directe selon l'invention détaillée ci-après, peuvent être implémentées à l'aide d'une installation qui comprend :

- une première mémoire, appelée mémoire de pixels MP : cette mémoire MP contient les pixels du support sur lesquels l'opération de transformée de Mojette directe doit être appliquée ;
- une unité de traitement et de calcul UTC : l'unité comprend un processeur, référencé qui effectue les opérations de lectures/écritures vers les mémoires de pixels MP et de bins MB, ainsi que des opérations d'application de l'opérateur mathématique XOR entre les pixels. Comme détaillé ci-après le processeur peut aussi appliquer cet opérateur à une combinaison de bin(s) et de pixel(s) ;
- une deuxième mémoire, appelée mémoire de bin MB: cette zone mémoire est utilisée pour stocker les résultats (bins) de la transformée de Mojette directe.

L'unité de traitement et de calcul UTC comprend une ou plusieurs mémoires de travail associée au processeur. L'unité peut être réalisée sous forme d'un ordinateur.

Les mémoires et l'unité de l'installation informatique décrites ci-dessus peuvent aussi être utilisées pour exécuter la transformée de Mojette directe selon l'invention, la transformée de Mojette inverse courante et la transformée de Mojette inverse selon l'invention.

Le contenu de la mémoire de bin peut être extrait par une autre entité. Cette entité peut stocker lesdits bins par exemple sur un disque distinct de la mémoire de bin ou les diffuser sur un réseau, par exemple sous forme de trames UDP/IP.

Transformation de Mojette directe courante

Des étapes d'exécution de la transformée de Mojette directe courante sont détaillées ci-dessous dans le cadre du calcul et de l'écriture d'un bin correspondant à l'indice 0, à savoir le bin[0], des bins de la projection1 illustrée à la figure 2.

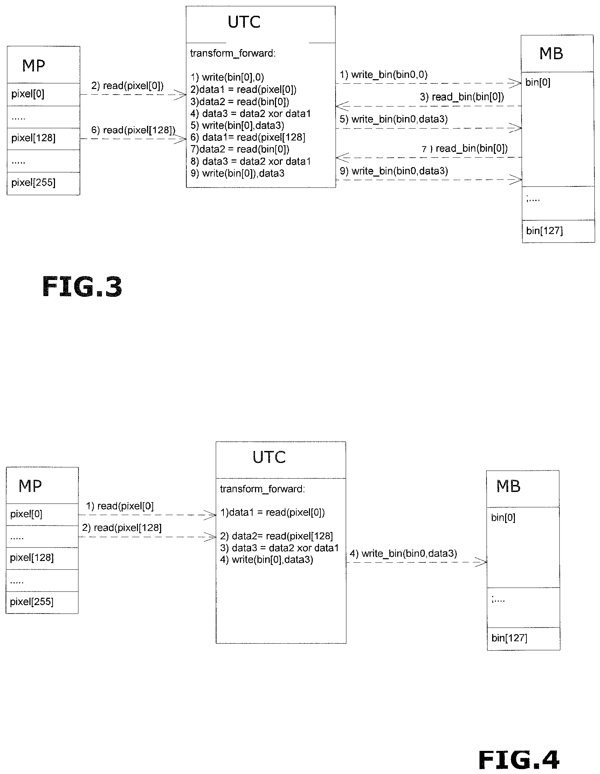

Ainsi, en lien avec la figure 3 qui illustre les différents échanges entre le processeur et les mémoires MB, MP pour le calcul de bin[0] de la projection 1 (ou plus précisément de projection1.bin[0]), ledit calcul du bin[0] selon l'implémentation de la Transformation de Mojette directe courante, comprend les étapes suivantes :

1)remise à zéro du bin[0] à générer ;
2)lecture du pixel[0] à partir de la mémoire de pixels ;
3)lecture du bin[0] de la projection1 ;
4)XOR entre le contenu courant du bin[0] et la valeur du pixel[0] ;
5)écriture du résultat intermédiaire de l'opération précédente dans la mémoire de bin à l'emplacement correspondant à bin[0] ;
6)lecture du pixel[128] à partir de la mémoire de pixels ;
7)relecture du bin[0] de la projection1 depuis la mémoire de bin ;
8)XOR entre le contenu courant du bin[0] de la projection1 et la valeur du pixel[128] ;
9)écriture du final de l'opération précédente dans la mémoire de bin à l'emplacement correspondant à bin[0].

On observe ainsi qu'une telle implémentation de la transformée de Mojette a nécessité d'effectuer un nombre important d'opérations et notamment de réinitialiser la valeur de bin[0] et d'écrire une valeur intermédiaire de bin[0].

Dans le cadre de l'exemple choisi, pour obtenir la transformation complète du support, cet ensemble d'opération est répété 128 fois.

Concernant la génération des deux autres projections, à savoir les projections « projection0 » et « projection2 », le processus est réalisé de manière similaire en combinant avec l'opérateur XOR les pixels rencontrés suivant la direction de projection appliquée pour la « projection0 » ou la« projection2 ». Le choix des pixels à combiner dépend de l'angle associé à la projection (cf. figure 2).

Transformation de Mojette directe selon l'invention

L'implémentation de la transformée Mojette directe selon invention permet de s'exempter des étapes de lectures/écritures successives dans la génération d'un bin d'une projection, et de supprimer l'initialisation du contenu d'une projection.

Des étapes d'exécution de l'implémentation de la transformée de Mojette directe selon l'invention, sont détaillées ci-dessous en lien avec la figure 4 dans le cadre du calcul et de l'écriture d'un bin correspondant à l'indice 0 (bin[0]) des bins de la projection1. Ainsi, le calcul du bin[0] (ou plus précisément de projection1.bin[0]) par application de la transformée de Mojette directe selon l'invention comprend les étapes suivantes :

1) lecture du pixel[0] à partir de la mémoire de pixels ;
2) lecture du pixel[128] à partir de la mémoire de pixels ;
3) XOR entre le contenu courant du bin[0] et la valeur du pixel[128] ;
4) écriture du résultat de l'opération précédente dans la mémoire de pixels

Pour l'implémentation de la Transformée de Mojette directe selon l'invention qui permet d'éviter les opérations de lectures/écritures intermédiaires, l'unité d'exécution comprend un générateur de code.

Le générateur de code est configuré pour exécuter les opérations suivantes :

1) exécution de l'algorithme de la transformée de Mojette directe courante afin de déterminer pour chaque bin d'une projection les combinaisons de pixels nécessaires dudit bin ;
2) production des instructions nécessaires à la génération d'un bin sous la forme : proj(k) = support(i,j) xor support(l,p)....,.

Où support(i,j), support(l,p) ... sont les pixels intervenant dans la génération du bin proj(k). L'étape 2) est réalisée sans étape d'initialisation ou remise à 0 de valeur de bin (c'est-à-dire proj(k)). Le résultat de la combinaison XOR de pixels est écrit dans la mémoire de bin sans écriture intermédiaire dans la mémoire de bin.

Le générateur de code peut générer autant de programmes de transformée de Mojette directe selon l'invention qu'il y a de combinaisons de taille de bloc utilisateur et de couple (M,R) configurés.

Lorsque l'unité de traitement et de calcul reçoit une requête lui indiquant de décomposer le bloc de pixels en bins, l'unité exécute le programme correspondant généré par le générateur de code afin d'appliquer la transformée de Mojette directe selon l'invention au bloc de pixels.

Après exécution dudit programme on obtient un ensemble de 386 bins correspondant aux bins des projections « projection 0 », « projection1 » et « projection 2» comme illustré à la figure 3A. L'ensemble de bins ainsi obtenu est le même qu'avec la transformée de Mojette directe courante, mais de manière beaucoup plus rapide puisque le nombre d'opérations nécessaires pour générer ces bins avec le ou les programmes produit(s) par le générateur de code, est plus faible.

Pour reconstruire le support, l'unité exécute une transformation de Mojette inverse détaillée ci-après.

Transformation de Mojette inverse courante

On décrit ci-après l'implémentation de la transformation Mojette inverse courante, c'est-à-dire l'implémentation de la transformation Mojette inverse connue de l'état de la technique, pour ensuite montrer les modifications apportées à cette implémentation de la transformation de Mojette inverse afin d'obtenir l'implémentation de la transformation de Mojette inverse selon l'invention.

On part d'une correspondance directe entre un pixel du support et un bin d'une projection. On entend par correspondance directe entre un pixel et un bin, le fait que le bin a été généré avec un seul pixel. La valeur du bin est alors celle du pixel.

Le pixel, appelé pixel direct, correspondant est reconstruit par écriture de la valeur du bin direct correspondant dans la mémoire de pixel à l'emplacement correspondant audit pixel direct.

Dans l'implémentation connue de l'état de la technique, le processeur parcourt alors toutes les projections associées au support pour soustraire la valeur de ce pixel reconstruit à chaque bin généré à l'aide dudit pixel et réécrire dans la mémoire de bin la nouvelle valeur dudit bin. Ce processus est répété pour l'ensemble des pixels du support.

Pour illustrer le processus de reconstruction, on repart de l'exemple, précédemment décrit, de sorte que le support à reconstruire est le support de 256 pixels à partir duquel 3 projections on été générées.

Ainsi, la mémoire de bin MB contient les bins des trois projections générées antérieurement et l'unité de traitement et de calcul UTC est utilisée pour reconstruire ledit support.

Le fichier de métadonnées associé aux projections générées permet de déterminer qu'il suffit de deux projections parmi les trois générées pour reconstituer le support (pour rappel M=2 et R=1)

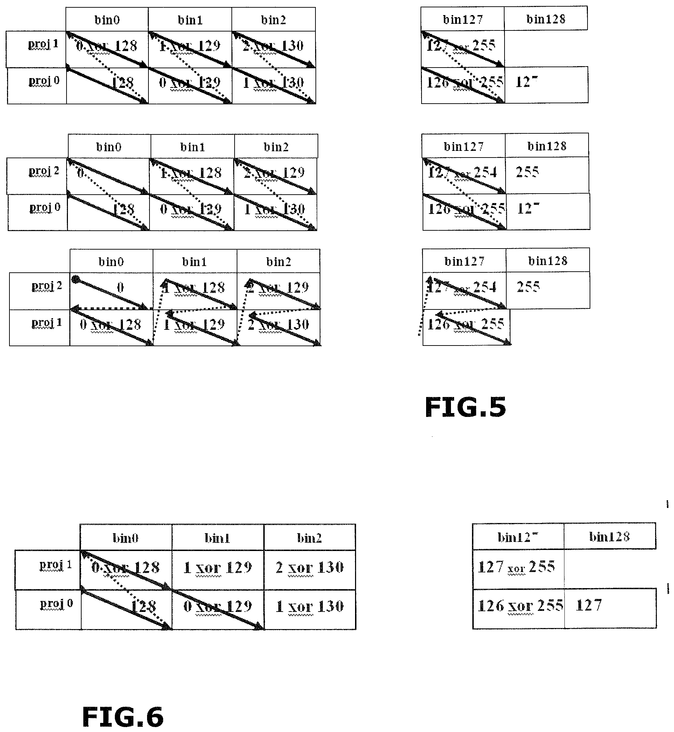

La figure 5 illustre le parcours de reconstruction pour chacune des combinaisons de projections possibles.

- combinaison de projections {projection 1, projection 0): projection0.bin[0] contient le pixel d'indice 128 ;
- combinaison de projections {projection 2, projection 0): projection0.bin[0] contient le pixel d'indice 128 et projection1.bin[0] contient le pixel d'indice 0.
- combinaison de projections {projection 2,projection 1): projection2.bin[0] contient le pixel d'indice 0

Pour débuter la reconstruction, l'unité de traitement et de calcul part d'un bin direct, c'est-à-dire un bon pour lequel il existe une correspondance directe entre le bin et un pixel du support.

Un exemple de reconstruction du support initial à partir de projection1 et projection0 est présenté ci-dessous.

Comme indiqué sur la figure 5, le point de départ est le bin d'indice 0 de la projection 0 (projection0.bin[0]) qui contient le pixel d'indice 128.

Le pixel d'indice 0 est obtenu par une opération XOR entre le pixel d'indice 128 et le bin d'indice 0 de la projection 1 (projection1.bin[0]):

$$\text{pixel[0] = pixel[128] XOR projection1.bin[0].}$$

Ce processus est répété de façon itérative jusqu'au bin d'indice 127. Les opérations effectuées pour reconstruire les pixels du support à partir du bin d'indice i sont:

- pixel[i+128] = pixel[i-1] xor proj0.bin[i]
- pixel[i] = pixel[i+128] xor proj1.bin[i]

Comme dans le cas de la transformée de Mojette directe décrite ci-dessus, l'implémentation de la transformée de Mojette inverse courante est réalisée avec une mémoire de bin, une mémoire de pixels et une unité d'une installation comme présenté ci-dessus.

Pour débuter l'opération de reconstruction des pixels du support, la mémoire de bin MB est chargée préalablement avec le nombre nécessaire de projections pour procéder à une reconstruction. Dans l'exemple utilisé dans le document (M=2, R=1), cette mémoire de bin est chargée avec 2 projections, c'est-à-dire avec 257 bins.

La source de ces projections peut être, par exemple, un support magnétique, un disque ou une trame d'un réseau IP.

Dans le cas de l'implémentation de la transformée de Mojette inverse courante, l'unité est configurée comme détaillé ci-après pour réaliser les opérations nécessaires à la reconstruction des pixels du support à partir des projections en effectuant des lectures/écritures vers les mémoires de bin et de pixels.

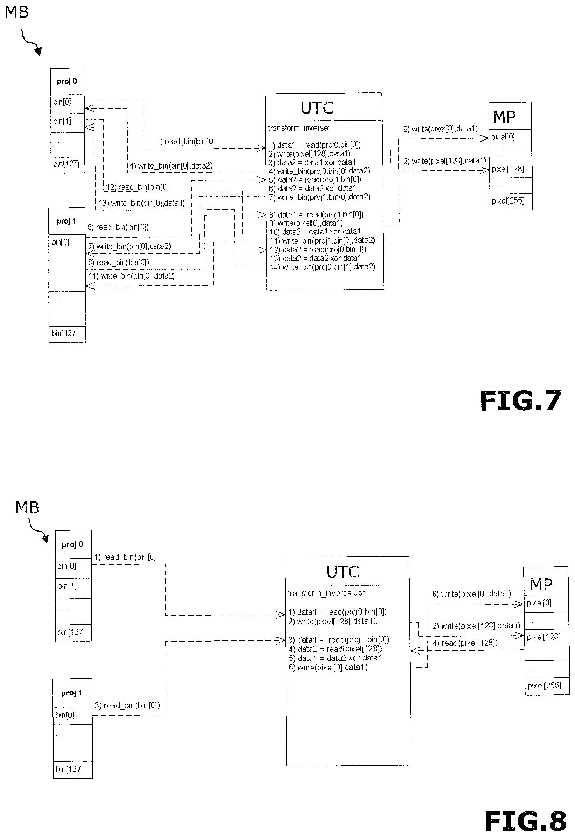

La figure 7 illustre les échanges entre l'unité et les mémoires pour la reconstruction de deux pixels (pixel[0] et pixel[128]) du support à partir des bins de projection1 et des bins de projection0. La figure 6 illustre l'ordre correspondant aux flèches dans lequel les bins sont parcourus pour reconstruire les deux pixels.

En lien avec la figure 7, le détail des opérations effectuées par l'implémentation courante pour reconstruire les pixels pixel[0] et pixel[128] est le suivant:

1) lecture du contenu du bin[0] de la projection0 qui contient le pixel[128] (datai) ;
2) écriture du pixel[128] dans la mémoire de support avec la valeur lue de bin[0] ;
3) mise à zéro de la valeur du bin bin[0] venant d'être lu (opération XOR sur luimême) ;
4) écriture du résultat de mise à zéro dans la mémoire de bin dans la cellule correspondant à bin[0] (bin d'indice 0 de la projection0) ;
5) lecture du bin[0] de la projection 1 (qui contient le résultat du XOR entre le pixel[0] et le pixel[128]) ;
6) opération XOR permettant la reconstruction du pixel[0] (data 2) ;
7) écriture du résultat de l'opération précédente dans le bin[0] de la projection 1: la valeur écrite correspond à la valeur du pixel[0] ;
8) lecture du bin[0] de la projection 1: contient la valeur du pixel[0] écrite dans l'opération précédente ;
9) écriture de la valeur lue précédemment dans la mémoire de support à l'emplacement pixel[0] ;
10) mise à zéro de la valeur du bin venant d'être lu (opération XOR sur luimême) ;
11) écriture du résultat dans la mémoire de bin (bin d'indice 0 de la projection 1) ;
12) lecture du bin d'indice 1 de la projection0 ;

13) opération XOR entre le contenu venant d'être lu et la valeur du pixel[0]: le résultat obtenu est la valeur du pixel[129] ;

14) écriture du résultat de l'opération XOR dans le bin[1] de la projection0

Dans le cas de l'implémentation de la transformée de Mojette courante décrite dans l'exemple ci-dessus, la reconstruction d'un pixel implique deux opérations XOR et deux réécritures de bin d'une projection. D'une manière générale on a M réécritures de bin d'une projection.

Transformée de Mojette Inverse selon l'invention

Dans l'implémentation de la transformée de Mojette Inverse objet de l'invention, les opérations intermédiaires de lecture et écritures dans la mémoire de bin sont supprimées. On obtient ainsi une reconstruction plus rapide en se basant sur le fait que, hormis pour le ou les pixels et bins directs, la reconstruction d'un pixel du support nécessite une combinaison entre le bin d'une projection et un nombre de pixels de support déjà reconstruits. Ce nombre dépend du nombre M de projections défini.

Ainsi, par rapport à l'exemple précédent les pixel[128,] pixel [0] et pixel[129] peuvent être reconstruits comme suit :

pixel[128] = projections[0].bin[0]

pixel[0] = projections[1].bin[0]^pixel[128]

et pixel[129] = projections[0].bin[1]^pixel[0]]

En effet, projections[0].bin[0] contient le pixel direct pixel[128] et constitue ainsi le point de départ de la reconstruction.

Ainsi, dans la nouvelle implémentation de la transformation de Mojette inverse, la reconstruction d'un pixel[k] d'un support est donnée par la forme générale : pixel[k] = projections[i].bin[j]Asupport(l)^...^support(n);

La figure 8 illustre les opérations réalisées pour le même exemple avec la nouvelle implémentation de la transformée de Mojette inverse, objet de l'invention:

1) lecture du contenu du bin[0] de la projection0 qui contient le pixel[128] (data1)

2) écriture du pixel[128] dans la mémoire de pixel

3) lecture du bin[0] de la projection1 (contient le résultat du XOR entre le pixel[0] et le pixel[128]);

4) lecture du pixel[128] à partir de la mémoire de pixel ;

5) XOR entre le pixel[128] et le contenu du bin[0] de la projection1: le résultat fournit la valeur du pixel[0] ;

6) écriture du résultat dans la mémoire de pixel à l'emplacement de pixel[0].

Pour générer un programme de reconstruction utilisant la transformée de Mojette Inverse objet de l'invention, l'unité est configurée pour réaliser une exécution du programme de reconstruction de pixels utilisant l'implémentation de la transformation Mojette inverse courante, en mode « hors-ligne », c'est-à-dire en simulant les étapes d'écritures sur les mémoires de bin et de pixels.

Cette exécution permet d'obtenir pour chaque pixel à reconstruire les pixels et le bin de la projection intervenant dans sa reconstruction ou, dans le cas d'une relation directe, d'obtenir un pixel direct correspondant à un bin direct.

A partir des relations entre pixels et bins identifiées au cours de ladite exécution hors ligne, l'unité génère un ou plusieurs programme(s) de reconstruction dit programme(s) de reconstruction « en ligne » selon lequel chaque pixel à reconstruire, noté pixel[k], autre que celui ou ceux présentant une relation directe à un bin, est calculé par une équation de la forme :

$$\text{pixel}[k] = \text{projection}[i].\text{bin}[j]^\wedge\text{pixel}[l]$$

ou

$$\text{pixel}[k] = \text{projection}[i].\text{bin}[j]^\wedge\text{pixel}[l]^\wedge...^\wedge\text{pixel}[n]$$

avec :

k, l, n étant des indices définissant les pixels du support à reconstruire qui sont intervenus dans le calcul de projection[i].bin[j] ;

^ : l'opérateur XOR

projection[i].bin[j] : la valeur d'un bin qui a été généré en utilisant le pixel [k], et les pixels pixel[l],...,pixel[n], en particulier la valeur du jième bin de projection[i].

Autrement dit, le ou chaque programme de reconstruction en ligne est une suite d'opérations de type support[k] = projection[i].bin[j]^support[l]^...^ support[n] obtenue par une exécution hors-ligne de l'algorithme de transformation de Mojette inverse selon l'implémentation connue de l'état de la technique, pour l'ensemble de M projections considéré. Avantageusement, les M projections utilisées pour reconstruire les pixels, sont classées dans l'ordre croissant de leurs angles (p,q).

L'unité peut générer autant de programmes de reconstruction qu'il y a de combinaisons de projections possibles et éventuellement de taille de blocs configurés.

L'installation et le procédé selon l'invention peuvent être utilisés pour différentes applications dont des applications de type "Scale-out NAS- Cloud storage", "Networking", réseau ad-hoc, codage d'images et de vidéos. Chaque mémoire peut être formée de plusieurs zones de mémoires distinctes et décentralisées ou non.

L'homme du métier comprend aisément que les différentes étapes et fonctions des modes de réalisations présentés ci-dessus peuvent être réalisées sous forme de programmes d'ordinateur. En particulier, les étapes décrites ci-dessus peuvent être réalisées sous forme d'instructions électroniques et/ou informatiques exécutables par un processeur.

Ces programmes d'ordinateur, ou instructions informatiques, peuvent être contenus dans des dispositifs de stockage de programme, par exemple des supports de stockage de données numériques lisibles par ordinateur, ou des programmes exécutables. Les programmes ou instructions peuvent également être exécutés à partir de périphériques de stockage de programme.

## Revendications

1. Système de traitement de données, ledit système étant configuré pour reconstituer un bloc, appelé support, formé de données informatiques de base, appelées pixels, à l'aide d'autres données informatiques, appelées bins, lesdits bins étant des éléments d'au moins deux projections différentes qui résultent d'une transformée mathématique de type Mojette, appliquée auxdits pixels, ladite transformée mathématique de type Mojette comprenant les étapes suivantes :

   i)- organisation du bloc de pixels en un rectangle de dimensions {P,Q}, P étant le nombre de colonnes et Q le nombre de lignes, puis
   ii)- définition d'un repère cartésien (p, q) dont l'origine est attachée à un pixel formant de préférence un coin du rectangle,
   iii)- définition de G directions, G étant un nombre entier supérieur ou égal à 2, dite directions de projection, dans le repère (p, q), et notée projection [i], avec i allant de 0 à G-1, de telle sorte que le support peut être reconstruit avec un nombre minimal donné, noté M, de projections, M étant inférieur ou égal à G,
   iv)- pour chacune desdites G directions de projection, on calcule, pour chaque pixel d'une ligne ou d'une colonne du bloc, le bin correspondant, noté bin[j] avec j allant de 0 à B-1, avec B le nombre de bins calculés, par combinaison, par application de l'opérateur XOR, dudit pixel avec les autres pixels du bloc rencontrés en suivant ladite direction de projection ou par égalité avec ledit pixel lorsqu'aucun autre pixel n'est rencontré en suivant ladite direction de projection ;

   le système comprenant:

   - une unité de traitement et de calcul (UTC) de données ;
   - une première zone mémoire, appelée mémoire de bin (MB), dans laquelle lesdits bins générés sont mémorisés ;
   - une deuxième zone mémoire, appelée mémoire de pixels (MP), distincte de la mémoire de bin (MB) et dans laquelle les pixels dudit bloc à reconstruire sont destinés à être écrits,

   **caractérisé en ce que** ladite unité de traitement et de calcul (UTC) comprend un programme, appelé programme d'association, comprenant, pour chaque pixel à reconstruire, les instructions suivantes :

   - identification du ou de chaque bin dans le calcul duquel un pixel à reconstruire est intervenu ;
   - génération d'une table de correspondance par simulation de l'application d'une transformée de Mojette Inverse aux bins d'au moins M projections, en remplaçant chaque étape de soustraction d'un pixel à un bin qui fait partie de la transformée de Mojette Inverse, par l'association dans la table de correspondance dudit pixel et dudit bin ou de chaque bin dans le calcul duquel le pixel est intervenu,

et, dans le cas d'un bin dont la génération a fait intervenir un ou plusieurs autres pixels que ledit pixel à reconstruire, ledit bin et ledit pixel à reconstruire, étant à la fin des opérations d'association, associés dans la table de correspondance avec ledit ou lesdits autres pixels qui sont intervenus dans le calcul dudit bin ;ladite unité de traitement et de calcul (UTC) étant configurée pour recevoir une requête de reconstruction du bloc de pixels, et réaliser les opérations de :

a) reconstruction d'un, ou plusieurs, pixel du support, dit pixel direct (pixel[128]), pour lequel il y a égalité de valeur avec un bin, dit bin direct (projection[0].bin[0]), le calcul dudit bin direct par ladite transformée mathématique de type Mojette n'ayant fait intervenir que ledit pixel direct, ledit ou chaque bin direct (projection[0].bin[0]) étant lu dans la mémoire de bin (MB) et ledit ou chaque pixel direct (pixel[128]) étant écrit dans la mémoire de pixels (MP) en écrivant dans la mémoire de pixels la valeur du bin direct (pixel[128]) correspondant ;
b) reconstruction de chaque pixel restant (pixel[0]) à reconstruire en appliquant l'opérateur XOR entre :

- un bin (projection[1].bin[0]), dont le calcul par ladite transformée mathématique de type Mojette a fait intervenir ledit pixel restant (pixel[0]), ledit bin étant lu dans la mémoire de bins, et
- le ou les autre(s) pixel(s) reconstruit(s) (pixel[128]) qui est ou sont intervenu(s), avec ledit pixel restant, dans ledit calcul dudit bin par ladite transformée mathématique de type Mojette; ledit ou lesdits autre(s) pixel(s) reconstruit(s) étant lu(s) dans la mémoire de pixels,

ledit pixel restant reconstruit étant écrit dans la mémoire de pixels (MP) ;
l'unité de traitement et de calcul comprenant un programme, appelé programme de reconstruction de pixels, permettant la réalisation des étapes a) et b), ledit programme présentant des instructions selon lesquelles chaque pixel direct à reconstruire, noté pixel(kd), est calculé par une équation de la forme : pixel (kd) = projection[i].bin[j],
et ledit programme présentant des instructions selon lesquelles chaque pixel à reconstruire, noté pixel (k), autre qu'un pixel direct, est calculé par une équation de la forme :

$$pixel\ (k) = projection[i].bin[j]\text{\textasciicircum}pixel(I)$$

ou

$$pixel\ (k) = projection[i].bin[j]\text{\textasciicircum}pixel(I)\text{\textasciicircum}...\text{\textasciicircum}\ pixel\ (n)$$

k ou kd étant l'indice du pixel du support à reconstruire

l, n étant des indices définissant différents pixels du support déjà reconstruits et ayant servi à la génération du bin projection[i].bin[j] ;
^ : l'opérateur XOR
projection[i].bin[j] : la valeur du bin[j] de la projection projection[i] qui a été généré en utilisant le pixel pixel (k) ou pixel (kd) ainsi que, lorsque le bin n'est pas un bin direct, les pixels pixel(I) ou pixel(I)^...^ pixel(n) ladite unité de traitement et de calcul étant configurée pour générer ledit programme de reconstruction de pixels en fonction de la table de correspondance.

2. Procédé de traitement de données, ledit procédé permettant de reconstituer dans une zone mémoire, appelée mémoire de pixels (MP), un bloc, appelé support, formé de données informatiques de base, appelées pixels, à l'aide d'autres données informatiques, appelées bins, lesdits bins étant des éléments d'au moins deux projections différentes qui résultent d'une transformée mathématique de type Mojette, appliquée auxdits pixels et qui sont mémorisés dans une zone mémoire, appelée mémoire de bin (MB), distincte de la mémoire de pixels (MP),
ladite transformée mathématique de type Mojette comprenant les étapes suivantes :

i)- organisation du bloc de pixels en un rectangle de dimensions {P,Q}, P étant le nombre de colonnes et Q le nombre de lignes, puis

ii)- définition d'un repère cartésien (p, q) dont l'origine est attachée à un pixel formant de préférence un coin du rectangle,

iii)- définition de G directions, G étant un nombre entier supérieur ou égal à 2, dite directions de projection, dans le repère (p, q), et notée projection [i], avec i allant de 0 à G-1, de telle sorte que le support peut être reconstruit avec un nombre minimal donné, noté M, de projections, M étant inférieur ou égal à G,

iv)- pour chacune desdites G directions de projection, on calcule, pour chaque pixel d'une ligne ou d'une colonne du bloc, le bin correspondant, noté bin[j] avec j allant de 0 à B-1, avec B le nombre de bin calculés, par combinaison, par application de l'opérateur XOR, dudit pixel avec les autres pixels du bloc rencontrés en suivant ladite direction de projection ou par égalité avec ledit pixel lorsqu'aucun autre pixel n'est rencontré en suivant ladite direction de projection ;**caractérisé en ce que** ledit procédé comprend les étapes suivantes : pour chaque pixel à reconstruire:

- identification du ou de chaque bin dans le calcul duquel ledit pixel à reconstruire est intervenu ;
- association dudit bin et dudit pixel dans une table de correspondance ;
- génération d'une table de correspondance par simulation de l'application d'une transformée de Mojette Inverse aux bins d'au moins M projections, en remplaçant chaque étape de soustraction d'un pixel à un bin qui fait partie de la transformée de Mojette Inverse, par l'association dans la table de correspondance dudit pixel et dudit bin ou de chaque bin dans le calcul duquel le pixel est intervenu,

et, dans le cas d'un bin dont la génération a fait intervenir un ou plusieurs autres pixels que ledit pixel à reconstruire, ledit bin et ledit pixel à reconstruire, étant à la fin des opérations d'association, associés dans la table de correspondance avec ledit ou lesdits autres pixels qui sont intervenus dans le calcul dudit bin,

- réception d'une requête de reconstruction du bloc de pixels,
- reconstruction d'un, ou plusieurs, pixel du support, dit pixel direct, pour lequel il y a égalité de valeur avec un bin, dit bin direct, le calcul dudit bin direct par ladite transformée mathématique de type Mojette n'ayant fait intervenir que ledit pixel direct, ledit ou chaque bin direct étant lu dans la mémoire de bin et ledit ou chaque pixel direct étant écrit dans la mémoire de pixels en écrivant dans la mémoire de pixels la valeur du bin direct correspondant ;
- reconstruction de chaque pixel restant à reconstruire en appliquant l'opérateur XOR entre un :

- bin, dont le calcul par ladite transformée mathématique de type Mojette a fait intervenir ledit pixel restant, ledit bin étant lu dans la mémoire de bins, et
- le ou les autre(s) pixel(s) reconstruit(s) qui est ou sont intervenu(s), avec ledit pixel restant, dans le calcul dudit bin par ladite transformée mathématique de type Mojette; ledit ou lesdits autre(s) pixel(s) reconstruit(s) étant lu(s) dans la mémoire de pixels,

ledit pixel restant reconstruit étant écrit dans la mémoire de pixels ; chaque pixel direct à reconstruire, noté pixel (k), étant calculé par une équation de la forme :

$$\text{pixel (kd)} = \text{projection[i].bin[j],}$$

et chaque pixel à reconstruire, noté pixel (k), autre qu'un pixel direct, est calculé par une équation de la forme :

$$\text{pixel (k)} = \text{projection[i].bin[j]}^\wedge \text{ pixel (I)}$$

ou

$$\text{pixel (k)} = \text{projection[i].bin[j]}^\wedge \text{ pixel (I)}^\wedge ... ^\wedge \text{ pixel (n)}$$

k ou kd étant l'indice du pixel du support à reconstruire

I, n étant des indices définissant différents pixels reconstruits et ayant servi à la génération du bin projection[i].bin[j] ;
^ : l'opérateur XOR

projection[i].bin[j] : la valeur du bin[j] de la projection projection[i] qui a été généré en utilisant le pixel pixel (kd) ou pixel (k) ainsi que, lorsque le bin n'est pas un bin direct, les pixels pixel (l) ou pixel (l)^...^ pixel (n), ladite unité de traitement et de calcul étant configurée pour générer ledit programme de reconstruction de pixels en fonction de la table de correspondance.

3. Produit de programme d'ordinateur téléchargeable depuis un réseau de communication et/ou stocké sur un support lisible par ordinateur et/ou exécutable par un processeur d'une unité de traitement et de calcul, **caractérisé en ce qu'**il comprend des instructions de code de programme pour mettre en œuvre les étapes d'un procédé selon la revendication 2 lorsque ledit programme est exécuté par le processeur.


**Patentansprüche**

1. Datenverarbeitungssystem, wobei das System derart konfiguriert ist, dass es mithilfe anderer informatischer Daten ("Bins") einen aus informatischen Basisdaten ("Pixeln") bestehenden Block ("Träger") wiederherstellt, wobei die Bins Elemente mit mindestens zwei unterschiedlichen Projektionen sind, die aus einer auf die Pixel angewandten mathematischen Mojette-Transformation resultieren, wobei die mathematische Mojette-Transformation folgende Schritte umfasst:

i) Organisieren des Pixelblocks in einem Rechteck mit den Abmessungen {P,Q}, wobei P die Anzahl der Spalten und Q die Anzahl der Zeilen ist, gefolgt durch
ii) Definieren einer kartesischen Referenzmarkierung (p, q), deren Ursprung mit einem Pixel verbunden ist, das vorzugsweise eine Ecke des Rechtecks bildet,
iii) Definieren von G Richtungen ("Projektionsrichtungen") , wobei G eine Ganzzahl größer oder gleich 2 ist, in der Markierung (p, q) mit der Notation Projektion [i], wobei i 0 - G-1 beträgt, sodass der Träger mit einer gegebenen Mindestzahl Projektionen (M) wiederhergestellt werden kann, wobei M kleiner oder gleich G ist,
iv) für jede der G Projektionsrichtungen: Berechnen des entsprechenden Bins (bin[j]) für jedes Pixel einer Zeile oder Spalte des Blocks, wobei j 0 - B-1 beträgt, wobei B die Anzahl der Bins des Pixels ist, die durch Kombination unter Anwendung des Operators XOR mit den anderen in Projektionsrichtung aufgefundenen Pixeln des Blocks bzw. durch Gleichheit mit dem Pixel, wenn kein Pixel in Projektionsrichtung aufgefunden wird, berechnet wird; wobei das System umfasst:

- eine Datenverarbeitungs- und -recheneinheit (UTC);
- einen ersten Speicherbereich ("Bin-Speicher (MB)"), in dem die erzeugten Bins gespeichert sind;
- einen zweiten Speicherbereich ("Pixelspeicher (MP)"), der sich vom Bin-Speicher (MB) unterscheidet und in dem die Pixel des wiederherzustellenden Blocks geschrieben werden sollen,

**dadurch gekennzeichnet, dass** die UTC ein Programm ("Zuordnungsprogramm") umfasst, das für jedes wiederherzustellende Pixel folgende Befehle umfasst:

- Erkennen des bzw. jedes Bins, an dessen Berechnung ein wiederherzustellendes Pixel beteiligt ist;
- Erzeugen einer Entsprechungstabelle durch Simulieren der Anwendung einer umgekehrten Mojette-Transformation auf die Bins von mindestens M Projektionen, wobei jeder Schritt des Abziehens eines Pixels von einem Bin, das Teil der umgekehrten Mojette-Transformation ist, ersetzt wird durch das Zuordnen des Pixels und des bzw. jedes Bins, an dessen Berechnung das Pixel beteiligt ist, in der Entsprechungstabelle;

und wobei, im Falle eines Bins, dessen Erzeugung die Beteiligung mindestens eines anderen Pixels als des wiederherzustellenden Pixels zur Folge gehabt hat, das Bin und das wiederherzustellende Pixel am Ende der Zuordnungsoperationen in der Entsprechungstabelle dem mindestens einen anderen an der Berechnung des Bins beteiligten Pixel zugeordnet sind; wobei die UTC derart konfiguriert ist, dass sie eine Wiederherstellungsanfrage über den Pixelblock empfängt und folgende Vorgänge durchführt:

a) Wiederherstellen mindestens eines Pixels des Trägers ("direktes Pixel" (pixel[128])), dessen Wert gleich dem eines Bins ("direktes Bin" (projection[0].bin[0j)) ist, wobei die Berechnung des direkten Bins durch die mathematische Mojette-Transformation nur die Beteiligung des direkten Pixels zur Folge gehabt hat, wobei das bzw. jedes direkte Bin (projection[0].bin[0]) im Bin-Speicher (MB) abgelesen wird und das bzw. jedes direkte Pixel (pixel[128]) im Pixelspeicher (MP) geschrieben wird, indem der Wert des entsprechenden direkten Bins (pixel[128]) im Pixelspeicher geschrieben wird;

b) Wiederherstellen jedes verbliebenen wiederherzustellenden Pixels (pixel[0]) unter Anwendung des Operators XOR zwischen:

- einem Bin (projection[1].bin[0]), dessen Berechnung durch die mathematische Mojette-Transformation die Beteiligung des verbliebenen Pixels (pixel[0]) zur Folge gehabt hat, wobei das Bin im Bin-Speicher abgelesen wird, und
- dem mindestens einen anderen wiederhergestellten Pixel (pixel[128]), das sich mit dem verbliebenen Pixel an der Berechnung des Bins durch die mathematische Mojette-Transformation beteiligt hat,

wobei das mindestens eine andere wiederhergestellte Pixel vom Pixel-Speicher abgelesen wird, wobei das verbliebene Pixel im Pixel-Speicher (MP) geschrieben wird;
wobei die Verarbeitungs- und Recheneinheit ein Programm ("Pixelwiederherstellungsprogramm") umfasst, das die Ausführung der Schritte a) und b) ermöglicht, wobei das Programm Befehle aufweist, wonach jedes wiederherzustellende direkte Pixel (pixel(kd)) durch folgende Gleichung berechnet wird: pixel (kd) = projection[i].bin[j],
und das Programm Befehle aufweist, wonach jedes andere wiederherzustellende Pixel (pixel(k)) als ein direktes Pixel durch folgende Gleichung berechnet wird:

pixel (k) = projection[i].bin[j]^pixel(l) oder
pixel (k) = projection[i].bin[j]^pixel(l)^...^ pixel (n)
wobei k bzw. kd der Index des wiederherzustellende Pixels des Trägers sind,
l, n Indizes sind, die unterschiedliche, bereits wiederhergestellte Pixel des Trägers definieren, die zur Erzeugung des Bins projection[i].bin[j] verwendet wurden ;
^ : der Operator XOR

projection[i].bin[j]: der Wert des bin[j] der Projektion projection[i], das erzeugt wurde unter Verwendung des Pixels pixel (k) oder pixel (kd) , und, sofern das Bin kein direktes Bin ist, der Pixel pixel(l) oder pixel(l)^...^ pixel(n), wobei die Verarbeitungs- und Recheneinheit derart konfiguriert ist, dass sie das Pixelwiederherstellungsprogramm als Funktion der Entsprechungstabelle erzeugt.

2. Verfahren zur Datenverarbeitung, wobei das Verfahren die Wiederherstellung eines aus informatischen Basisdaten ("Pixeln") bestehenden Blocks ("Trägers") mithilfe anderer informatischer Daten ("Bins") in einem Speicherbereich ("Pixelspeicher (MP)") ermöglicht, wobei die Bins Elemente von mindestens zwei unterschiedlichen Projektionen sind, die aus einer auf die Pixel angewandten mathematischen Mojette-Transformation resultieren, die in einem anderen Speicherbereich ("Bin-Speicher (MB)" als dem Pixelspeicher (MP)) gespeichert sind,

wobei die mathematische Mojette-Transformation folgende Schritte umfasst:

i) Organisieren des Pixelblocks in einem Rechteck mit den Abmessungen {P,Q}, wobei P die Anzahl der Spalten und Q die Anzahl der Zeilen ist, gefolgt durch
ii) - Definieren einer kartesischen Referenzmarkierung (p, q), deren Ursprung mit einem Pixel verbunden ist, das vorzugsweise eine Ecke des Rechtecks bildet,
iii) Definieren von G Richtungen ("Projektionsrichtungen") , wobei G eine Ganzzahl größer oder gleich 2 ist, in der Markierung (p, q) mit der Notation Projektion [i], wobei i 0 - G-1 beträgt, sodass der Träger mit einer gegebenen Mindestzahl Projektionen (M) wiederhergestellt werden kann, wobei M kleiner oder gleich G ist,
iv) für jede der G Projektionsrichtungen: Berechnen des entsprechenden Bins (bin[j]) für jedes Pixel einer Zeile oder Spalte des Blocks, wobei j 0 - B-1 beträgt, wobei B die Anzahl der Bins des Pixels ist, die durch Kombination unter Anwendung des Operators XOR mit den anderen in Projektionsrichtung aufgefundenen Pixeln des Blocks bzw. durch Gleichheit mit dem Pixel, wenn kein Pixel in Projektionsrichtung aufgefunden wird, berechnet wird; **dadurch gekennzeichnet, dass** das Verfahren folgende Schritte umfasst: für jedes wiederherzustellende Pixel:

- Erkennen des bzw. jedes Bins, an dessen Berechnung das wiederherzustellende Pixel beteiligt ist;
- Zuordnen des Bins und des Pixels in einer Entsprechungstabelle;
- Erzeugen einer Entsprechungstabelle durch Simulieren der Anwendung einer umgekehrten Mojette-Transformation auf die Bins von mindestens M Projektionen, wobei jeder Schritt des Abziehens eines Pixels von einem Bin, das Teil der umgekehrten Mojette-Transformation ist, ersetzt wird durch das Zuordnen des Pixels und des bzw. jedes Bins, an dessen Berechnung das Pixel beteiligt ist, in der Entsprechungstabelle;

und wobei, im Falle eines Bins, dessen Erzeugung die Beteiligung mindestens eines anderen Pixels als des wiederherzustellenden Pixels zur Folge gehabt hat, das Bin und das wiederherzustellende Pixel am Ende der Zuordnungsoperationen in der Entsprechungstabelle dem mindestens einen anderen an der Berechnung des Bins beteiligten Pixel zugeordnet sind;

- Empfangen einer Anfrage über die Wiederherstellung des Pixelblocks,
- Wiederherstellen mindestens eines Pixels des Trägers ("direktes Pixel"), dessen Wert gleich dem eines Bins ("direktes Bin") ist, wobei die Berechnung des direkten Bins durch die mathematische Mojette-Transformation nur die Beteiligung des direkten Pixels zur Folge gehabt hat, wobei das bzw. jedes direkte Bin im Bin-Speicher abgelesen wird und das bzw. jedes direkte Pixel im Pixelspeicher geschrieben wird, indem der Wert des entsprechenden direkten Bins im Pixelspeicher geschrieben wird;
- Wiederherstellen jedes verbliebenen wiederherzustellenden Pixels unter Anwendung des Operators XOR zwischen:
- einem Bin, dessen Berechnung durch die mathematische Mojette-Transformation die Beteiligung des verbliebenen Pixels zur Folge gehabt hat, wobei das Bin im Bin-Speicher abgelesen wird, und
- dem mindestens einen anderen wiederhergestellten Pixel, das sich mit dem verbliebenen Pixel an der Berechnung des Bins durch die mathematische Mojette-Transformation beteiligt hat,

wobei das mindestens eine andere wiederhergestellte Pixel vom Pixel-Speicher abgelesen wird, wobei das verbliebene Pixel im Pixel-Speicher geschrieben wird;
wobei jedes wiederherzustellende Pixel ("pixel(k)") mittels folgender Gleichung berechnet wird:

$$\text{pixel (kd)} = \text{projection[i].bin[j]},$$

wobei jedes andere wiederherzustellende Pixel ("pixel(k)"), das kein direktes Pixel ist, mittels folgender Gleichung berechnet wird:

$$\text{pixel (k)} = \text{projection[i].bin[j]}\verb|^|\text{pixel(l)}$$

oder

$$\text{pixel (k)} = \text{projection[i].bin[j]}\verb|^|\text{pixel(l)}\verb|^|...\verb|^| \text{pixel (n)}$$

wobei k bzw. kd der Index des wiederherzustellende Pixels des Trägers sind,
l, n Indizes sind, die unterschiedliche, wiederhergestellte Pixel definieren, die zur Erzeugung des Bins projection[i].bin[j] verwendet wurden ;
^ : der Operator XOR
projection[i].bin[j]: der Wert des bin[j] der Projektion projection[i], das erzeugt wurde unter Verwendung des Pixels pixel (k) oder pixel (kd) , und, sofern das Bin kein direktes Bin ist, der Pixel pixel(l) oder pixel(l)^...^ pixel(n), wobei die Verarbeitungs- und Recheneinheit derart konfiguriert ist, dass sie das Pixelwiederherstellungsprogramm als Funktion der Entsprechungstabelle erzeugt.

3. Von einem Kommunikationsnetz herunterladbares und/oder auf einem computerlesbaren Datenträger gespeichertes und/oder von einem Prozessor einer Verarbeitungs- und Recheneinheit ausführbares Computerprogrammprodukt, **dadurch gekennzeichnet, dass** es Programmcodebefehle zur Ausführung der Schritte eines Verfahrens nach Anspruch 2 bei Ausführung durch den Prozessor umfasst.

**Claims**

1. A data processing system, said system being configured to reconstruct a block, called support, formed from basic computer data, called pixels, using other computer data, called bins, said bins being elements of at least two different projections that result from a mathematical transform of the Mojette type applied to said pixels, said mathematical transform of the Mojette type comprising the following steps:

i)- organizing the block of pixels into a rectangle with dimensions {P,Q}, P being the number of columns and Q being the number of rows, then

ii)- defining a cartesian coordinate system (p, q), the origin of which is attached to a pixel preferably forming a corner of the rectangle,

iii)- defining G directions, G being an integer greater than or equal to 2, called projection directions, in the coordinate system (p, q), and denoted projection [i], with i ranging from 0 to G-1, such that the support can be reconstructed with a given minimum number, denoted M, of projections, M being less than or equal to G,

iv)- for each of said G projection directions, calculating, for each pixel of a row or a column of the block, the corresponding bin, denoted bin[j] with j ranging from 0 to B-1, with B the number of bins calculated, by combination, by application of the XOR operator, of said pixel with the other pixels of the block encountered by following said projection direction or by equality with said pixel when no other pixel is encountered by following said projection direction;

the system comprising:

- a data processing unit (UTC);
- a first memory zone, called bin memory (MB), in which said generated bins are stored;
- a second memory zone, called pixel memory (MP), separate from the bin memory (MB) and in which the pixels of said block to be reconstructed are intended to be written,

**characterized in that** said processing unit (UTC) comprises a program, called association program, comprising, for each pixel to be reconstructed, the following instructions:

- identifying the or each bin in the computation of which a pixel to be reconstructed is involved;
- generating a lookup table by simulating the application of an Inverse Mojette transform to the bins with at least M projections, replacing each step of subtracting a pixel from a bin that is part of the Inverse Mojette transform, with the association in the lookup table of said pixel and said bin or of each bin in the computation of which the pixel is involved,

in the lookup table of said pixel and said bin or of each bin in the calculation of which the pixel is involved,

and, in the case of a bin whose generation has involved one or several pixels other than said pixel to be reconstructed, said bin and said pixel to be reconstructed being, at the end of the association operations, associated in the lookup table with said other pixel(s) that are involved in the calculation of said bin, said processing unit (UTC) being configured to receive a reconstruction request of the block of pixels, and to perform the following operations:

a) reconstruction of one or several pixels of the support, called direct pixel (pixel[128]), for which there is an equal value with a bin, called direct bin (projection[0].bin[0]), the computation of said direct bin by said mathematical transform of the Mojette type only involving said direct pixel, said or each direct bin (projection[0].bin[0]) being read in the bin memory (MB) and said or each direct pixel (pixel[128]) being written in the pixel memory (MP) by writing, in the pixel memory, the value of the corresponding direct bin (pixel[128]);

b) reconstruction of each remaining pixel (pixel[0]) to be reconstructed by applying the XOR operator between:

- a bin (projection[1].bin[0]), the computation of which by said mathematical transform of the Mojette type involved said remaining pixel (pixel[0]), said bin being read in the bin memory, and
- the other reconstructed pixel(s) (pixel[128]) that is or are involved, with said remaining pixel, in said computation of said bin by said mathematical transform of the Mojette type; said other reconstructed pixel(s) being read in the pixel memory,

said remaining reconstructed pixel being written in the pixel memory (MP);

the processing unit comprising a program, called pixel reconstruction program, allowing the performance of steps a) and b), said program having instructions according to which each direct pixel to be reconstructed, denoted pixel(kd), is computed by an equation of form: pixel (kd) = projection[i].bin[j],

and said program having instructions according to which each pixel to be reconstructed, denoted pixel (k), other than a direct pixel, is calculated by an equation of form:

$$\text{pixel (k) = projection[i].bin[j]\^{}pixel(l)}$$

or

$$\text{pixel (k) = projection[i].bin[j]\^{}pixel(l)\^{}...\^{} pixel (n)}$$

k or kd being the index of the pixel of the support to be reconstructed

l, n being indices defining different pixels of the support already reconstructed and used to generate the bin projection[i].bin[j];
^: the XOR operator
projection[i].bin[j]: the value of the bin[j] of the projection projection[i] that has been generated by using the pixel pixel (k) or pixel (kd) as well as, when the bin is not a direct bin, the pixels pixel(l) or pixel(l)^...^ pixel(n), said processing unit being configured to generate said pixel reconstruction program as a function of the lookup table.

2. A data processing method, said method allowing reconstruction in a memory zone, called pixel memory (MP), of a block, called support, made up of basic computer data, called pixels, using other computer data, called bins, said bins being elements of at least two different projections that result from a mathematical transform of the Mojette type, applied to said pixels and which are stored in a memory zone, called bin memory (MB), separate from the pixel memory (MP), said mathematical transform of the Mojette type comprising the following steps:

   i)- organizing the block of pixels into a rectangle with dimensions {P,Q}, P being the number of columns and Q being the number of rows, then
   ii)- defining a cartesian coordinate system (p, q), the origin of which is attached to a pixel preferably forming a corner of the rectangle,
   iii)- defining G directions, G being an integer greater than or equal to 2, called projection directions, in the coordinate system (p, q), and denoted projection [i], with i ranging from 0 to G-1, such that the support can be reconstructed with a given minimum number, denoted M, of projections, M being less than or equal to G,
   iv)- for each of said G projection directions, computing, for each pixel of a row or a column of the block, the corresponding bin, denoted bin[j] with j ranging from 0 to B-1, with B the number of bins calculated, by combination, by application of the XOR operator, of said pixel with the other pixels of the block encountered by following said projection direction or by equality with said pixel when no other pixel is encountered by following said projection direction; **characterized in that** said method comprises the following steps:
   for each pixel to be reconstructed:

   - identifying the or each bin in the computation of which said pixel to be reconstructed is involved;
   - associating said bin and said pixel in a lookup table;
   - generating a lookup table by simulating the application of an Inverse Mojette transform to the bins with at least M projections, replacing each step of subtracting a pixel from a bin that is part of the Inverse Mojette transform, with the association in the lookup table of said pixel and said bin or of each bin in the computation of which the pixel is involved,

   and, in the case of a bin whose generation has involved one or several pixels other than said pixel to be reconstructed, said bin and said pixel to be reconstructed being, at the end of the association operations, associated in the lookup table with said other pixel(s) that are involved in the computation of said bin,

   - receiving a reconstruction request of the block of pixels,
   - reconstructing one or several pixels of the support, called direct pixel, for which there is an equal value with a bin, called direct bin, the computation of said direct bin by said mathematical transform of the Mojette type only involving said direct pixel, said or each direct bin being read in the bin memory and said or each direct pixel being written in the pixel memory by writing, in the pixel memory, the value of the corresponding direct bin;
   - reconstructing each remaining pixel to be reconstructed by applying the XOR operator between:

      - a bin, the computation of which by said mathematical transform of the Mojette type involved said remaining pixel, said bin being read in the bin memory, and
- the other reconstructed pixel(s) that is or are involved, with said remaining pixel, in the computation of said bin by said mathematical transform of the Mojette type; said other reconstructed pixel(s) being read in the pixel memory,

said remaining reconstructed pixel being written in the pixel memory;
each direct pixel to be reconstructed, denoted pixel (k), being computed by an equation of form:

$$\text{pixel (kd)} = \text{projection[i].bin[j],}$$

and each pixel to be reconstructed, denoted pixel (k), other than a direct pixel, is computed by an equation of form:

$$\text{pixel (k)} = \text{projection[i].bin[j]}\^\text{pixel (l)}$$

or

$$\text{pixel (k)} = \text{projection[i].bin[j]}\^\ \text{pixel (l)}\^\ldots\^\ \text{pixel (n)}$$

k or kd being the index of the pixel of the support to be reconstructed
l, n being indices defining different reconstructed pixels and used to generate the bin projection[i].bin[j];
^: the XOR operator
projection[i].bin[j]: the value of the bin[j] of the projection projection[i] that has been generated by using the pixel pixel (kd) or pixel (k) as well as, when the bin is not a direct bin, the pixels pixel(l) or pixel(l)^...^ pixel(n),
said processing unit being configured to generate said pixel reconstruction program as a function of the lookup table.

3. A computer program product downloadable from a communication network and/or stored on a computer-readable medium and/or executable by a processor of a processing unit, **characterized in that** it comprises program code instructions for implementing the steps of a method according to claim 2 when said program is executed by the processor.

UTC

MB

| Proj0.Bin [0] |
| ... |
| Proj0.Bin [128] |
| Proj1.Bin [0] |
| ... |
| Proj1.Bin [128] |
| ... |
| Proj2.Bin [0] |
| ... |
| Proj2.Bin [128] |

MP

| pixel [0] |
| |
| pixel [255] |

**FIG.1**

**FIG.2**

| bins | | | | | | | | |
|---|---|---|---|---|---|---|---|---|
| | 0 | 1 | 2 | | i | | 127 | 128 |
| proj 0 | 128 | 0 xor 129 | 1 xor 130 | ------- | support[i-1] xor support[128+i] | ------- | 126 xor 255 | 127 |
| proj 1 | 0 xor 128 | 1 xor 129 | 2 xor 130 | ------- | support[i] xor support[128+i] | ------- | 255 | |
| proj 2 | 0 | 1 xor 128 | 2 xor 129 | ------- | support[i] xor support[128+i-1] | ------- | 127 xor 254 | 255 |

**FIG.2A**

**FIG.3**

MP
| |
| --- |
| pixel[0] |
| ..... |
| pixel[128] |
| ..... |
| pixel[255] |

2) read(pixel[0])

6) read(pixel[128])

UTC

transform_forward:

1) write(bin[0],0)
2)data1 = read(pixel[0])
3)data2 = read(bin[0])
4) data3 = data2 xor data1
5) write(bin[0],data3)
6) data1= read(pixel[128]
7)data2 = read(bin[0])
8) data3 = data2 xor data1
9) write(bin[0]),data3

1) write_bin(bin0,0)

3) read_bin(bin[0])

5) write_bin(bin0,data3)

7 ) read_bin(bin[0])

9) write_bin(bin0,data3)

MB
| |
| --- |
| bin[0] |
| ;.... |
| bin[127] |

**FIG.4**

MP
| |
| --- |
| pixel[0] |
| ..... |
| pixel[128] |
| ..... |
| pixel[255] |

1) read(pixel[0]

2) read(pixel[128]

UTC

transform_forward:

1)data1 = read(pixel[0])

2) data2= read(pixel[128]
3) data3 = data2 xor data1
4) write(bin[0],data3)

4) write_bin(bin0,data3)

MB
| |
| --- |
| bin[0] |
| ;.... |
| bin[127] |

| | bin0 | bin1 | bin2 |
|---|---|---|---|
| proj 1 | 0 xor 128 | 1 xor 129 | 2 xor 130 |
| proj 0 | 128 | 0 xor 129 | 1 xor 130 |

| bin127 | bin128 |
|---|---|
| 127 xor 255 | |
| 126 xor 255 | 127 |

| | bin0 | bin1 | bin2 |
|---|---|---|---|
| proj 2 | 0 | 1 xor 128 | 2 xor 129 |
| proj 0 | 128 | 0 xor 129 | 1 xor 130 |

| bin127 | bin128 |
|---|---|
| 127 xor 254 | 255 |
| 126 xor 255 | 127 |

| | bin0 | bin1 | bin2 |
|---|---|---|---|
| proj 2 | 0 | 1 xor 128 | 2 xor 129 |
| proj 1 | 0 xor 128 | 1 xor 129 | 2 xor 130 |

| bin127 | bin128 |
|---|---|
| 127 xor 254 | 255 |
| 126 xor 255 | |

# FIG.5

| | bin0 | bin1 | bin2 |
|---|---|---|---|
| proj 1 | 0 xor 128 | 1 xor 129 | 2 xor 130 |
| proj 0 | 128 | 0 xor 129 | 1 xor 130 |

| bin127 | bin128 |
|---|---|
| 127 xor 255 | |
| 126 xor 255 | 127 |

# FIG.6

MB

**proj 0**

| bin[0] |
| bin[1] |
| .... |
| bin[127] |

1) read_bin(bin[0]

14) write_bin(bin[0],data2)

12) read_bin(bin[0]

13) write_bin(bin[0],data1)

**proj 1**

| bin[0] |

5) read_bin(bin[0])

7) write_bin(bin[0],data2)

8) read_bin(bin[0])

11) write_bin(bin[0],data2)

| .... |
| bin[127] |

**UTC**

transform_inverse:

1) data1 = read(proj0.bin[0])
2) write(pixel[128],data1);
3) data2 = data1 xor data1
4) write_bin(proj0.bin[0],data2)
5) data2 = read(proj1.bin[0])
6) data2 = data2 xor data1
7) write_bin(proj1.bin[0],data2)
8) data1 = read(proj1.bin[0])
9) write(pixel[0],data1)
10) data2 = data1 xor data1
11) write_bin(proj1.bin[0],data2)
12) data2 = read(proj0.bin[1])
13) data2 = data2 xor data1
14) write_bin(proj0.bin[1],data2)

9) write(pixel[0],data1)

2) write(pixel[128],data1)

**MP**

| pixel[0] |
| pixel[128] |
| .... |
| pixel[255] |

**FIG.7**

MB

**proj 0**

1) read_bin(bin[0]

| bin[0] |
| bin[1] |
| ..... |
| bin[127] |

**proj 1**

3) read_bin(bin[0])

| bin[0] |
| ... |
| bin[127] |

**UTC**

transform_inverse opt:

1) data1 = read(proj0.bin[0])
2) write(pixel[128],data1);
3) data1 = read(proj1.bin[0])
4) data2 = read(pixel[128])
5) data1 = data2 xor data1
6) write(pixel[0],data1)

6) write(pixel[0],data1)

2) write(pixel[128],data1)

4) read(pixel[128])

**MP**

| pixel[0] |
| pixel[128] |
| ..... |
| pixel[255] |

**FIG.8**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- Analysis of 1-19 Mojette Transform Implementation on Reconfigurable Hardware. **VASARHELYI et al.** Dagstuhl Seminar Proceedings 06141, Schloss Dagstuhl, Oberwolfach, Germany. Schloss Dagstuhl, 02 Avril 2006
- Analysis of 1-19 Mojette Transform Implementation on Reconfigurable Hardware. **JOZSEF VASARHELYI et al.** Dagstuhl Seminar Proceedings 06141, Schloss Dagstuhl, Oberwolfach, Germany. Schloss Dagstuhl, 02 Avril 2006
- *IEEE TRANSACTIONS ON ACOUSTICS, SPEECH, AND SIGNAL PROCESSING,* Février 1987, vol. 35 (2
- **F.J. MACWILLIAMS ; N.J.A. SLOANE.** *The Theory of Error-Correcting Codes. North Holland,* 1983
- Integrated Computer - Aided Engineering. **J.P. GUÉDON ; B. PARREIN ; N. NORMAND.** Internet distributed image information system. IOS Press, 2001, vol. 8, 205-214
- **NICOLAS NORMAND ; ANDREW KINGSTON ; PIERRE EVENOU.** A geometry driven reconstruction algorithm for the Mojette transform. *Discrete Geometry for Computer Imagery, Szeged : Hungary,* 2006
- Description multiple de l'information par transformation Mojette. **BENOÎT PARREIN.** thèse de doctorat. Université de Nantes, Novembre 2001